# EUROPÄISCHE PATENTSCHRIFT

(11) **EP 3 456 586 B1**
(45) Veröffentlichungstag und Bekanntmachung des Hinweises auf die Patenterteilung: **29.03.2023**
(21) Anmeldenummer: 17191619.0
(22) Anmeldetag: 18.09.2017
(51) Int. Cl.: B60Q 1/04, B60Q 1/26

(54) **VORRICHTUNG UND VERFAHREN ZUR POSITIONSGENAUEN, WENIGSTENS TEILWEISEN BEFESTIGUNG VON FAHRZEUGLEUCHTEN AN FAHRZEUGEN, INSBESONDERE KRAFTFAHRZEUGEN, SOWIE FAHRZEUGLEUCHTE**
DEVICE AND METHOD FOR PRECISELY AND AT LEAST PARTIALLY FIXING VEHICLE LIGHTS ON VEHICLES, ESPECIALLY MOTOR VEHICLES AND VEHICLE LAMP
DISPOSITIF ET PROCÉDÉ DE POSITIONNEMENT PRÉCIS PERMETTANT, AU MOINS PARTIELLEMENT, LA FIXATION DES LAMPES POUR VÉHICULE SUR LES VÉHICULES, EN PARTICULIER SUR LES VÉHICULES AUTOMOBILES AINSI QUE LAMPE POUR VÉHICULE

(43) Veröffentlichungstag der Anmeldung: 20.03.2019
(73) Patentinhaber: odelo GmbH, 70329 Stuttgart (DE)
(72) Erfinder: MÜLLER, Otto, 73344 Gruibingen (DE)
(74) Vertreter: Benninger, Johannes

(56) Entgegenhaltungen:
- EP-A1- 2 168 810
- DE-A1- 3 929 086
- DE-A1- 19 650 864
- DE-A1-102004 007 401
- DE-A1-102005 030 676
- FR-A1- 2 727 479

## Beschreibung

Die Erfindung betrifft eine Vorrichtung gemäß dem Oberbegriff des Anspruchs 1 und eine hiermit ausgestattete Fahrzeugleuchte gemäß dem Oberbegriff des Anspruchs 9.

Insbesondere beschäftigt sich die Erfindung mit einer Verbesserung der Einstellung und Befestigung von Fahrzeugleuchten an Fahrzeugen, allem voran in hierfür vorgesehenen Einbauöffnungen deren Karosserien beziehungsweise Karosserieteilen.

Mit zunehmender Fertigungspräzision in der Automobiltechnik steigen die Anforderungen an die Passgenauigkeit von Fahrzeugteilen. Dabei gilt das Hauptaugenmerk dem vom Endkunden unmittelbar erkennbaren äußeren Erscheinungsbild von Fahrzeugen, oft widergespiegelt durch das so genannte Spaltmaß, welches für Maßhaltigkeit, Abstand sowie Lage, beispielsweise hinsichtlich einer Verdrehlage, zweier oder mehrerer erkennbar unterschiedlicher, aneinander angrenzender Fahrzeugteile steht. Dabei ist ein möglichst gleichmäßiges und/oder kleines Spaltmaß einzuhalten, um die Qualitätsanforderungen einerseits hinsichtlich des Erscheinungsbilds und andererseits hinsichtlich einer möglichst strömungsgünstigen und "aus einem Guss" erscheinenden Fahrzeugoberfläche bzw. -kontur zu erfüllen.

Besonders augenfällig ist dies bei Fahrzeugleuchten im Allgemeinen und Fahrzeugheckleuchten im Speziellen, welche sich je nach Fahrzeugmodell teils nahtlos, teils mit möglichst präzise und gleichmäßig einzuhaltendem Spaltmaß bündig in die Oberfläche einer Karosserie beziehungsweise eines oder mehrerer Karosserieteile einfügen müssen.

Eine Fahrzeugleuchte umfasst im Wesentlichen einen von einem Leuchtengehäuse und einer Lichtscheibe ganz oder teilweise umschlossenen Leuchteninnenraum und mindestens ein darin vollständig oder teilweise beherbergtes, mindestens eine Lichtquelle umfassendes Leuchtmittel für wenigstens eine Lichtfunktion der Fahrzeugleuchte.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte.

Beispiele für Fahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Die Befestigung einer Fahrzeugleuchte am Fahrzeug ist üblicherweise zwischen ihrem Leuchtengehäuse und mindestens einer eine im Folgenden unabhängig von ihrer Ausgestaltung als Einbauöffnung bezeichneten, beispielsweise eine Aufnahmeausnehmung in Form einer Vertiefung oder einer Aufnahmeöffnung in Form eines Ausschnitts oder Lochs bildenden Aussparung für die Fahrzeugleuchte beispielsweise in der Karosserie oder in einem oder mehreren Karosserieteilen begrenzenden Karosseriewandung vorgesehen.

Die Befestigung erfolgt beispielsweise mittels einer oder mehrerer Befestigungsvorrichtungen mit jeweils mindestens einem leuchtenseitig vorgesehenen ersten Befestigungselement sowie mindestens einem karosserie- bzw. fahrzeugseitig in der Einbauöffnung vorgesehenen, mit dem mindestens einen ersten Befestigungselement korrespondierenden zweiten Befestigungselement.

Beispielsweise ist durch DE 103 48 228 A1 bekannt, Fahrzeugheckleuchten mit Gewindebolzen und Muttern in der Einbauöffnung der Karosserie des Fahrzeuges zu befestigen. Dabei sind leuchtenseitig und fahrzeugseitig entsprechend mit den Gewindebolzen und Muttern korrespondierende Vorkehrungen getroffen, wie beispielsweise Öffnungen, Hintergreifungen, etc., welche zusammen mit den Gewindebolzen und Muttern erste und zweite Befestigungselemente bilden.

Um zwischen dem Rand der Fahrzeugleuchte und dem Rand der Einbauöffnung über den Umfang einen innerhalb von Toleranzvorgaben konstant breiten Spalt zu bilden, gestaltet sich die Montage der Fahrzeugleuchte schwierig. Ebenso verhält es sich bei der Montage von beispielsweise innerhalb von Toleranzvorgaben zumindest teils spaltfrei und/oder nahtlos, teils mit möglichst präzise und gleichmäßig einzuhaltendem Spaltmaß bündig in die Karosserie bzw. die Karosserieteile einzufügenden Fahrzeugleuchten.

Dabei wird die Einhaltung der Toleranzvorgaben beeinflusst durch innerhalb einer Gesamttoleranz einer Fahrzeugleuchte zulässige Oberflächenabweichungen zum Linienriß bzw. zur Hüllfläche der Fahrzeugleuchte und zulässige Umrissabweichungen zum Linienriss bzw. zur Hüllfläche der Fahrzeugleuchte. Die Gesamttoleranz einer Fahrzeugleuchte ergibt sich dabei aus den Toleranzen der Einzelbauteile, wie etwa der verwendeten Spritzgussbauteile, sowie aus den Toleranzen der Fertigungsprozesse, wie beispielsweise für die Verbindung zweier oder mehrerer Einzelbauteile einer Fahrzeugleuchte verwendete Schweißprozesse.

Eine gesamte Toleranzkette von der Herstellung bis zum Einbau einer Fahrzeugleuchte in eine Einbauöffnung umfasst damit zusätzlich zu den zur Gesamttoleranz angegebenen Einflussgrößen die zulässige Toleranz in Bezug auf Position und Lage beim Einbau der Fahrzeugleuchte in die Einbauöffnung.

Im Folgenden wird diese Problematik deshalb zusammengefasst als "Erfüllung von Toleranzvorgaben" bezeichnet, unabhängig davon, ob es sich um eine Maßhaltung der Fahrzeugleuchte in deren Herstellungsprozess oder um die Einhaltung eines Spaltmaßes bei deren Montage handelt, oder wenn es sich dabei zumindest zum Teil um einen spaltfreien, nahtlosen Übergang beispielsweise von der Lichtscheibe einer Fahrzeugleuchte zu einem angrenzenden Karosserieteil oder einer Karosseriefläche oder eines sonstigen Bauteils oder einer sonstigen Oberfläche eines Fahrzeugs handelt.

Stand der Technik sind Bearbeitungsstationen in denen Befestigungselemente beispielsweise rückseitig am Leuchtengehäuse der Fahrzeugleuchte mechanisch nachgearbeitet werden, um Toleranzvorgaben erfüllen zu können.

Ebenfalls bekannt sind Bohr-/Fräs-Bearbeitungsstationen, bei denen die Aufnahmepunkte für Befestigungselemente gesetzt oder Anschlagelemente nachbearbeitet werden.

Nachteilig an einer derartigen mechanischen Bearbeitung ist, dass dabei entstehende Späne als Verunreinigungen in den Leuchteninnenraum gelangen können.

Ferner weist eine solche mechanische Bearbeitung den Nachteil einer Gefahr einer Beschädigung der Lichtscheibe der während einer solchen mechanischen Bearbeitung mit der Lichtscheibe nach unten liegenden Fahrzeugleuchte auf.

Diese mechanische Bearbeitung ist außerdem nicht geeignet, die in Zukunft immer enger werdenden Toleranzvorgaben prozesssicher erfüllen zu können.

Um diesen Nachteil zu beheben, ist ebenfalls durch DE 103 48 228 A1 bekannt, dass das leuchtenseitige erste Befestigungselement zweigeteilt ist. Das leuchtenseitig vorgesehene erste Befestigungselement besteht dabei aus einem unmittelbar an der Fahrzeugleuchte an einem hierfür vorgesehenen Aufnahmepunkt am Leuchtengehäuse befestigten ersten Halteelement und einem an dem ersten Halteelement befestigten zweiten Halteelement. Für den späteren Einbau in der Einbauöffnung korrespondiert das zweite Halteelement mit dem karosserie- bzw. fahrzeugseitigen zweiten Befestigungselement. Das erste Halteelement weist eine Ausnehmung für das zweite Halteelement auf. Die Ausnehmung ist größer ausgeführt, als für das zweite Halteelement erforderlich. In die Ausnehmung ragt das zweite Halteelement. Um eine möglichst präzise Ausrichtung in der Einbauöffnung zu erhalten, wird die Fahrzeugleuchte zunächst ohne leuchtenseitig vorgesehenes erstes Befestigungselement hergestellt. Die Fahrzeugleuchte wird dann entsprechend ihrer Anordnung in einer Einbauöffnung lagegenau in eine Aufnahme eingelegt. Das erste Halteelement wird am hierzu vorgesehenen Aufnahmepunkt am Leuchtengehäuse der Fahrzeugleuchte befestigt. In die Ausnehmung des ersten Halteelements wird das zweite Halteelement eingebracht und bezogen auf die lagegenaue Ausrichtung der Fahrzeugleuchte in der Aufnahme ausgerichtet. Anschließend wird in den verbleibenden Raum der Ausnehmung ein Klebemittel eingebracht, welches unter Beibehaltung der Ausrichtung des zweiten Halteelements aushärtet. Anschließend wird die Fahrzeugleuchte mit dem komplett fertig gestellten ersten Befestigungselement der Aufnahme entnommen.

Durch DE 10 2008 030 031 ist bekannt, dass das Klebemittel mittels Induktion erwärmbar und damit aktivierbar ist.

Durch DE 101 04 906 A1 ist bekannt, dass das erste Befestigungselement relativ zum Leuchtengehäuse verstellbar ist. Dabei muss das erste Befestigungselement bei der Montage der Fahrzeugleuchte in der Einbauöffnung ausgerichtet werden.

Um die Montage von Fahrzeugleuchten mit mehrteiligen, verstellbaren ersten Befestigungselementen zu vereinfachen ist durch DE 42 42 439 C1 bekannt, dass das erste Befestigungselement ein Halteteil aufweist, das auf einem Gewindeteil eines Trägers sitzt und mit dem der Träger gegen eine Auflage verspannbar ist, der mindestens eine Aufnahmeöffnung aufweist, durch welche der Gewindeteil ragt. Das Halteteil ist bereits vor der Montage auf dem Gewindeteil mit einem Sicherungs- und Spannteil gesichert, welches während der Montage in Verbindung mit dem Gewindeteil das Halteteil gegen die Auflage verspannt.

Durch DE 199 26 842 A1 ist eine insbesondere als Fahrzeugheckleuchte ausgeführte Fahrzeugleuchte mit verstellbarer Befestigung zur Festlegung ein einer Einbauöffnung einer Karosserie oder eines Karosserieteils eines Fahrzeugs bekannt. Die Fahrzeugleuchte ist mittels eines Gewindebolzens sowie einer Einstellmutter in der Einbauöffnung an der Karosserie oder dem Karosserieteil angebracht. Die Einstellmutter ist zwischen dem Leuchtengehäuse und dem Karosserieteil beziehungsweise der Karosserie auf dem Gewindebolzen angeordnet. Die Befestigungsmutter ist auf der der Fahrzeugleuchte abgewandten Seite des Karosserieteils beziehungsweise der Karosserie auf dem Gewindebolzen angeordnet.

Damit einerseits zwischen dem Rand der Lichtscheibe und einer die Einbauöffnung umgebenden Wandung ein konstant breiter Spalt gebildet wird, und damit andererseits die durch die Lichtscheibe gebildete Fläche eine die Einbauöffnung umgebende Oberfläche der Karosserie bündig fortführt und/oder einer durch den Rand der Einbauöffnung vorgegebenen Kontur bündig folgt, gestaltet sich die Montage der Fahrzeugleuchte schwierig.

Durch EP 2 133 235 A2 ist bekannt, einen Gewindebolzen in einer hierfür vorgesehenen Ausnehmung an einem Leuchtengehäuse einer Fahrzeugleuchte vermittels eines Klebemittels festzulegen, wobei die Fahrzeugleuchte in einer Lehre gehalten wird, welche die Lage und Position des Gewindebolzens vorgibt. Das Klebemittel ist vermittels Induktion aktivier- und schnell aushärtbar, so dass der Gewindebolzen in der von der Lehre vorgegebenen Lage und Position fixiert wird.

Eine nachträgliche Einstellung unter Veränderung der axialen Position des Gewindebolzens ist hierbei nicht mehr möglich.

Um eine solche nachträgliche Einstellung zu ermöglichen, ist bekannt, den Gewindebolzen als eine Hohlschraube mit Innen- und Außengewinde auszuführen, die mit ihrem Innengewinde auf einen in seiner Lage und Position am Leuchtengehäuse festgelegten Gewindebolzen aufgeschraubt ist. Zwischen dem Innengewinde der Hohlschraube und dem Gewindebolzen ist ein Klemmteil aus Kunststoff, beispielsweise Nylon, angeordnet. Beispielsweise kann das Klemmteil wie bei einer selbstsichernden Mutter ringförmig koaxial zum Innengewinde an der Hohlschraube angeordnet sein, oder wie bei einer entsprechenden selbstsichernden Schraube in einer sich entlang der Längsachse des Gewindebolzens erstreckenden, in das Außengewinde des Gewindebolzens eingelassenen Nut angeordnet sein.

Nachteilig hieran ist eine mangelnde Festlegung der Hohlschraube gegenüber dem Gewindebolzen durch das Klemmteil, wodurch es zu einer unbeabsichtigten Verstellung der Hohlschraube kommt, wenn auf diese beispielsweise von der Rückseite der Karosserie her eine Mutter mit einem zur Befestigung der Fahrzeugleuchte in der Einbauöffnung vorgesehenen Drehmoment aufgeschraubt wird.

Durch GB 2 412 704 A ist eine Fahrzeugleuchte mit einer Vorrichtung zur wenigstens teilweise Befestigung der Fahrzeugleuchte in einer Einbauöffnung einer Karosserie eines Fahrzeugs bekannt. Die Vorrichtung umfasst eine Hohlschraube mit einem Außengewinde und einer sich koaxial zur Längsachse der Hohlschraube erstreckenden zentralen Öffnung. Die Vorrichtung umfasst ferner einen an der Fahrzeugleuchte festlegbaren oder festgelegten Gewindebolzen mit einer ersten, durch die zentrale Öffnung hindurchreichenden Gewindepartie sowie ein in der zentralen Öffnung auf der ersten Gewindepartie koaxial zwischen Hohlschraube und dem Gewindebolzen angeordnetes hülsenförmiges Klemmteil. Die Hohlschraube weist einen einseitig des Außengewindes angeordneten, radial von der Hohlschraube abstehenden Bund auf, welcher in montiertem Zustand der Vorrichtung der Fahrzeugleuchte zugewandt ist. Das Klemmteil ist in der zentralen Öffnung um die Längsachse der Hohlschraube drehbar angeordnet. Das Klemmteil ist in Axialrichtung parallel zur Längsachse der Hohlschraube formschlüssig angeordnet. Das Klemmteil weist eine koaxial zur Längsachse der Hohlschraube verlaufende, durchgehende Axialöffnung auf, deren Innendurchmesser kleiner ist, als der Außendurchmesser der ersten Gewindepartie des Gewindebolzens. Das Klemmteil umfasst einen Ansatz, der eine in Eingriff mit einem Werkzeug bringbare Formgebung aufweist, um das Klemmteil gegenüber der Hohlschraube zu drehen.

Durch DE 202 13 362 U1 ist eine Befestigungsvorrichtung bekannt, die ein Trägerteil mit einem Außengewinde und einem Bund aufweist. Zur Drehmomentabstützung greift ein an einem Funktionskörper festgelegter Anschlag in montiertem Zustand der Befestigungsvorrichtung in eine im Bund des Trägerteils angeordnete Anschlagnut ein.

Durch EP 2 933 144 B1 sind eine Vorrichtung zur wenigstens teilweise Befestigung einer Fahrzeugleuchte in einer Einbauöffnung einer Karosserie eines Fahrzeugs, eine mit einer solchen Vorrichtung ausgestattete Fahrzeugleuchte und ein Verfahren zur Anordnung und Einstellung einer entsprechenden Vorrichtung zur wenigstens teilweise Befestigung einer Fahrzeugleuchte in einer Einbauöffnung einer Karosserie eines Fahrzeugs bekannt. Die Vorrichtung umfasst eine Hohlschraube mit einem Außengewinde und einer sich koaxial zur Längsachse der Hohlschraube erstreckenden zentralen Öffnung, einen an der Fahrzeugleuchte festlegbaren oder festgelegten Gewindebolzen mit einer ersten, durch die zentrale Öffnung hindurchreichenden Gewindepartie, sowie ein in der zentralen Öffnung auf der ersten Gewindepartie koaxial zwischen Hohlschraube und dem Gewindebolzen angeordnetes hülsenförmiges Klemmteil. Die Hohlschraube weist einen einseitig des Außengewindes angeordneten, radial von der Hohlschraube abstehenden Bund auf, welcher in montiertem Zustand der Vorrichtung der Fahrzeugleuchte zugewandt ist. Das Klemmteil ist in der zentralen Öffnung um die Längsachse der Hohlschraube drehbar angeordnet. Das Klemmteil ist in Axialrichtung parallel zur Längsachse der Hohlschraube formschlüssig angeordnet. Das Klemmteil weist eine koaxial zur Längsachse der Hohlschraube verlaufende, durchgehende Axialöffnung auf, deren Innendurchmesser kleiner ist, als der Außendurchmesser der ersten Gewindepartie des Gewindebolzens. Das Klemmteil umfasst einen Ansatz, der eine in Eingriff mit einem Werkzeug bringbare Formgebung aufweist, um das Klemmteil gegenüber der Hohlschraube zu drehen. Im Bund der Hohlschraube ist mindestens eine Anschlagnut angeordnet. Ein an der Fahrzeugleuchte festgelegter, mit der mindestens einen Anschlagnut korrespondierender Anschlag greift in montiertem Zustand der Vorrichtung zur Drehmomentabstützung in mindestens eine Anschlagnut ein. Das Verfahren sieht vor, dass zunächst der Gewindebolzen an der Fahrzeugleuchte festgelegt wird, anschließend die Hohlschraube mit dem in deren zentraler Öffnung angeordneten Klemmteil mit dem Bund voraus auf die erste Gewindepartie des Gewindebolzens aufgeschraubt wird, bis der an der Fahrzeugleuchte festgelegte Anschlag in eine Anschlagnut am Bund eingreift, und dann eine Einstellung der Position des Außengewindes und des dieses begrenzenden Bunds in Axialrichtung zur Längsachse der Hohlschraube entlang des Gewindebolzens stattfindet, wobei durch Drehung des Klemmteils gegenüber der ersten Gewindepartie des Gewindebolzens die Position des Außengewindes und des dieses begrenzenden Bunds in Axialrichtung zur Längsachse der Hohlschraube entlang des Gewindebolzens eingestellt wird.

Die Einstellung erfolgt dabei vor dem Einbau der Leuchte in die Einbauöffnung.

Durch DE 10 2005 030 676 A1, DE 196 50 864 A1 und DE 39 29 086 A1 ist jeweils eine Vorrichtung zur wenigstens teilweisen Befestigung einer Fahrzeugleuchte an einem Fahrzeug bekannt. Fahrzeugleuchte und Fahrzeug bilden jeweils einen Gegenpart zueinander. Die Vorrichtung umfasst eine in einer Aufnahme am einen Gegenpart anordbare Spreizhülse, einen unter Aufweitung der Spreizhülse entlang einer Längsachse beweglich in der Spreizhülse aufgenommen Spannkonus, und ein am anderen Gegenpart festlegbares und durch dessen Betätigung auf eine Position des Spannkonus entlang der Längsachse abstandsveränderlich wirkendes Befestigungsmittel. Die Spreizhülse ist in unaufgeweitetem Zustand in der Aufnahme in Richtung entlang der Längsachse schwimmend aufgenommen. Die Spreizhülse ist in aufgeweitetem Zustand in der Aufnahme in ihrer dann eingenommenen Position entlang der Längsachse festgelegt. Durch abstandsverringernd auf die Position des Spannkonus wirkende Betätigung des Befestigungsmittels wird zunächst die Spreizhülse zur Anlage am Gegenpart gebracht. Anschließend weitet der Spannkonus die Spreizhülse auf.

Durch DE 10 2004 007 401 A1, ist eine zur wenigstens teilweisen Befestigung einer Fahrzeugleuchte an einem Fahrzeug bekannt. Sie umfasst einen in einer Aufnahmeöffnung eines Montageträgers angeordneten Dübel mit einer Längsachse, ein konzentrisch zu dessen Längsachse und entlang dessen Längsachse verschiebbar angeordnetes Klemmstück, und eine in dieses eingeschraubte Schraube. Wird die Schraube angezogen, zieht sie das Klemmstück entlang der Längsachse des Dübels in den Dübel, wodurch dieser sich weitet und in der Aufnahmeöffnung festgelegt wird. Zwischen Schraubenkopf und Dübel wird ein Fahrzeugteil, wie etwa eine Fahrzeugleuchte, eingeklemmt, wenn die Schraube angezogen wird. Der Dübel weitet sich hierbei bestimmungsgemäß in der Aufnahmeöffnung.

Durch EP 2 168 810 A1 ist eine Fahrzeugleuchte bekannt, die mit ihrem Gehäuse zur wenigstens teilweisen Befestigung an einem Karosserieteil eines Fahrzeugs vorgesehen ist. Sie umfasst eine in einer Aufnahmeöffnung des Gehäuses entlang einer Längsachse angeordnete Schraube. Der Schraubenkopf befindet sich dabei in einer zunächst entlang der Längsachse schwimmend in der Aufnahmeöffnung angeordneten Spreizhülse. Der Schraubenschaft reicht durch eine Bohrung im Karosserieteil. Wird die Schraube beispielsweise vermittels einer Mutter gegen das Karosserieteil gezogen, kommt die Spreizhülse zum Anliegen am Karosserieteil und der Schraubenkopf weitet die Spreizhülse schließlich auf, wodurch Spreizhülse und Schraube in der Aufnahmeöffnung festgelegt werden.

Durch FR 2 727 479 A1 ist ein Befestigungselement bekannt, welches in einer Aufnahme in einem ersten Gegenpart entlang einer ersten Verschiebeachse verschiebbar angeordnet ist, und welches in einer Aufnahme in einem zweiten Gegenpart entlang einer zweiten Verschiebeachse und entlang einer dritten Verschiebeachse verschiebbar angeordnet ist. Die Verschiebeachsen stehen senkrecht aufeinander. Durch Eindrehen eines Befestigungsmittels in Form einer selbstschneidenden Schraube wird diese in Richtung parallel zur dritten Verschiebeachse in das Befestigungselement hinein bewegt. In einem oberen Teil weitet sich das Befestigungselement dadurch in Richtung der ersten Verschiebeachse und in einem unteren Teil weitet es sich dadurch in Richtung der zweiten Verschiebeachse.

Zusammengefasst sind die bekannten Befestigungsvorrichtungen im Hinblick auf eine Verbesserung der Einhaltung eines Spaltmaßes sehr montage- und/oder zeitaufwändig und durch die Verwendung einer Vielzahl von miteinander zusammenwirkender, einzeln vorzuhaltender und bei der Montage zusammenzuführender sowie zu beschaffender Bauteile sehr kostspielig.

Ein generelles Ziel bei der Entwicklung von in einer Serienfertigung in Einbauöffnungen von Karosserien von Fahrzeugen zu montierender Fahrzeugleuchten ist die Verringerung der Kosten.

Einen nicht unerheblichen Kostenbeitrag stellen die Montagekosten dar, welche es beispielsweise durch einen hohen Vorfertigungsgrad, eine geringe Anzahl von Bauteilen, mit denen während der Montage umgegangen werden muss, einhergehend mit einem sich kostensenkend auswirkenden geringen Zeitaufwand zur Montage, zu senken gilt.

Dies kann erreicht werden beispielsweise durch eine Einsparung der Anzahl der vorzunehmenden einzelnen Handlungen während der Montage, wodurch es zu weniger Fehlmontagen kommt, was die Gesamtkosten senkt, sowie durch Befestigungsvorrichtungen, die verliersicher fahrzeug- und/oder leuchtenseitig vormontiert werden können und die ohne Nachjustieren eine positionsgenaue, wenigstens teilweise Befestigung einer Fahrzeugleuchte am Fahrzeug gestatten.

Eine Aufgabe der Erfindung ist die Schaffung einer positionsgenauen Befestigung von Fahrzeugleuchten an Fahrzeugen.

Insbesondere ist es eine Aufgabe der Erfindung eine Vorrichtung zur wenigstens teilweisen Befestigung von Fahrzeugleuchten an Fahrzeugen sowie eine mit einer entsprechenden Vorrichtung ausgestattete Fahrzeugleuchte zu entwickeln, welche die Erfüllung von Toleranzvorgaben mit einfachen und kostengünstigen Mitteln sicherstellen.

Die Aufgabe wird jeweils durch die Merkmale der unabhängigen Ansprüche gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Ein erster Gegenstand der Erfindung betrifft demnach eine Vorrichtung zur wenigstens teilweisen Befestigung einer Fahrzeugleuchte an einem Fahrzeug, insbesondere einer eine Einbauöffnung begrenzenden Karosseriewandung.

Die Vorrichtung umfasst eine Spreizhülse, einen unter Aufweitung der Spreizhülse entlang einer Längsachse beweglich in der Spreizhülse aufgenommen Spannkonus, und ein auf eine Position des Spannkonus entlang der Längsachse zu ihm abstandsveränderlich wirkendes Befestigungsmittel.

Die Spreizhülse ist in unaufgeweitetem Zustand zumindest entlang der Längsachse schwimmend an der Fahrzeugleuchte - vorzugsweise deren Leuchtengehäuse - oder am Fahrzeug - vorzugsweise einer eine Einbauöffnung für die Fahrzeugleuchte an der Karosserie des Fahrzeugs begrenzenden Karosseriewandung - angeordnet.

Die Spreizhülse wird durch abstandsverringernde Betätigung des Befestigungsmittels zunächst am Gegenpart zu ihrer schwimmenden Anordnung entlang der Längsachse zum Anliegen gebracht, also am Fahrzeug bei schwimmender Anordnung an der Fahrzeugleuchte und an der Fahrzeugleuchte bei schwimmender Anordnung am Fahrzeug.

Die Spreizhülse ist beziehungsweise wird in durch weitere abstandsverringernde Betätigung des Befestigungsmittels erhaltenem aufgeweitetem Zustand in ihrer in unaufgeweitetem Zustand beziehungsweise vormals schwimmenden Anordnung unbeweglich festgelegt.

Zusätzlich ist die Spreizhülse zu ihrer schwimmenden Anordnung in unaufgeweitetem Zustand entlang der Längsachse in Richtung einer normal zur Längsachse verlaufenden Verschiebeachse ebenfalls schwimmend an der Fahrzeugleuchte oder am Fahrzeug angeordnet. In diesem Fall weitet sich die Spreizhülse unter Einwirkung des Spannkonus bei abstandsverringernder Betätigung des Befestigungsmittels in Richtung einer sowohl normal auf der Längsachse, als auch normal auf der Verschiebeachse aufstehenden Ausdehnungsachse.

Das Befestigungsmittel kann zwei miteinander zusammenwirkende Befestigungselemente umfassen, beispielsweise einen Gewindebolzen und eine Gewindemutter, einen Glattbolzen und eine gegen Abzug vom Glattbolzen selbsthemmende Klemmscheibe, ähnlich einem Kabelbinder einen Riffelbolzen und eine gegen Abzug vom Riffelbolzen wirkende Raste.

Der Spannkonus kann eines der Befestigungselemente umfassen, beispielsweise einen Gewindebolzen oder eine Gewindemutter.

Bevorzugt weist die Spreizhülse außen eine Riffelung auf, welche bei deren Aufweitung die schwimmende Lagerung hemmt und schließlich aufhebt.

Zwischen Spreizhülse und Spannkonus kann alternativ oder zusätzlich eine Riffelung vorgesehen sein, welche den Spannkonus, sobald dieser die Spreizhülse aufweitet, in der Spreizhülse festsetzt.

Besonders bevorzugt ist der Spannkonus verliersicher in der Spreizhülse angeordnet. Dies kann durch eine vermittels eines inneren Rastabschnitt begrenzte konusförmige Partie einer mit dem Spannkonus zusammenwirkenden inneren Mantelfläche der Spreizhülse vorgenommen sein, welcher innere Rastabschnitt so weit in eine von der konusförmigen Partie umgebene Aufnahmeöffnung ragt, dass ein hierin aufgenommener Spannkonus den Rastabschnitt nicht aus eigener Kraft passieren kann.

Die Vorrichtung umfasst demnach beispielsweise einen sich entlang einer Längsachse erstreckenden Bolzen, beispielsweise einem Gewindebolzen, und ein mit dem Bolzen zusammenwirkendes Befestigungselement, beispielsweise einer Mutter.

Denkbare Kombinationen von Bolzen und mit diesem zusammenwirkendem Befestigungsmittel sind beispielsweise Gewindebolzen und Gewindemutter, Glattbolzen und gegen Abzug vom Glattbolzen selbsthemmende Klemmscheibe, Riffelbolzen und gegen Abzug vom Riffelbolzen wirkende Raste, ähnlich einem Kabelbinder.

Die Vorrichtung umfasst außerdem einen entlang der Längsachse des Bolzens beweglich angeordneten Spannkonus.

Darüber hinaus umfasst die Vorrichtung eine beispielsweise hohlzylinderförmige Spreizhülse mit einer bevorzugt zu einem kurz als geschlossenes Ende bezeichneten ersten Ende der Spreizhülse hin von einem Boden beispielsweise mit einer zentralen Öffnung zur Durchführung des gegebenenfalls vorgesehenen Bolzens begrenzten kegelabschnittförmigen Partie ihrer inneren Mantelfläche. Die kegelabschnittförmige Partie der inneren Mantelfläche der Spreizhülse korrelliert mit der äußeren Gestalt des Spannkonus dahingehend, dass dieser zumindest im weitesten Abschnitt der kegelabschnittförmigen Partie frei von einer Verformung der Spreizhülse aufgenommen werden kann.

Gegenüberliegend dem geschlossenen beziehungsweise ersten Ende weist die Spreizhülse ein kurz als offenes Ende bezeichnetes zweites Ende auf. Sowohl die Hohlzylinderachse der hohlzylinderförmigen Spreizhülse, als auch das Lot der kegelabschnittförmigen Partie erstrecken sich vom ersten Ende zum gegenüberliegenden zweiten Ende der Spreizhülse entlang der Längsachse des Bolzens. Die Längsachse steht normal auf einer von einem Rand der zentralen Öffnung im Boden aufgespannten Fläche auf. Die kegelabschnittförmige Partie der inneren Mantelfläche der Spreizhülse umfasst wenigstens einen Abschnitt, dessen kurz als Innendurchmesser bezeichnete Innenabmessung sich in wenigstens einer Richtung normal zur Längsachse von dem offenen Ende der Spreizhülse hin zum geschlossenen Ende konusartig verjüngt.

Zum offenen Ende hin ist die kegelabschnittförmige Partie vorzugsweise durch einen inneren Rastabschnitt begrenzt, in dem der Abstand der inneren Mantelfläche zur Längsachse in wenigstens einer Richtung normal zur Längsachse kleiner ist, als auf der dem offenen Ende zugewandten Seite in der kegelabschnittförmigen Partie.

Der innere Rastabschnitt erlaubt eine verliersichere, in Richtung der Längsachse schwimmende Lagerung des Spannkonus in der Spreizhülse.

Die äußere Mantelfläche der Spreizhülse weist bevorzugt einen mittleren Mantelflächenabschnitt in Form eines geraden, allgemeinen Zylinders auf, dessen Zylinderachse sich parallel zur Längsachse erstreckt. In beiden Richtungen entlang der Längsachse gesehen weist die äußere Mantelfläche der Spreizhülse auf beiden Seiten des mittleren Mantelflächenabschnitts jeweils einen zum mittleren Mantelflächenabschnitt hin wirkenden äußeren Rastabschnitt auf. In den äußeren Rastabschnitten ist der Abstand der äußeren Mantelfläche zur Längsachse in wenigstens einer Richtung normal zur Längsachse größer, als im mittleren Mantelflächenabschnitt.

Die beiden äußeren Rastabschnitte erlauben eine verliersichere, in Richtung der Längsachse schwimmende Lagerung der Spreizhülse in einer in ihren Querschnittsabmessungen mit den Querschnittsabmessungen des mittleren Mantelflächenabschnitts normal zur Längsachse korrespondierenden Öffnung einer Fahrzeugleuchte oder in einer entsprechend korrespondierenden Öffnung in einer eine Einbauöffnung für die Fahrzeugleuchte begrenzenden Karosseriewandung.

Der Spannkonus kann eine zentrale Öffnung zur Durchführung eines beispielsweise als Bolzen ausgeführten Befestigungselements aufweisen.

Alternativ kann der Spannkonus mit dem Bolzen verbunden und mit diesem gemeinsam entlang der Längsachse des Bolzens zunächst schwimmend beweglich angeordnet sein. In diesem Fall bildet die Vorrichtung eine im Umgang besonders einfach handhabbare Einheit, da der Spannkonus gemeinsam mit dem Bolzen verliersicher in der Spreizhülse angeordnet ist und die Spreizhülse mit dem von ihr verliersicher aufgenommenen Spannkonus leuchten- oder fahrzeugseitig zunächst bis zur positionsgenauen Ausrichtung von Fahrzeugleuchte relativ zum Fahrzeug verliersicher in Richtung der Längsachse schwimmend gelagert ist.

Ein zweiter Gegenstand der Erfindung betrifft eine Fahrzeugleuchte mit mindestens einer an ihr angeordneten Vorrichtung zu deren wenigstens teilweisen Befestigung an einer eine Einbauöffnung begrenzenden Karosseriewandung, wobei:
- die Vorrichtung eine Spreizhülse, einen entlang einer Längsachse unter Aufweitung der Spreizhülse beweglich in dieser aufgenommenen Spannkonus, und ein mit dem Spannkonus zusammenwirkendes Befestigungsmittel umfasst,
- die Spreizhülse in unaufgeweitetem Zustand zumindest entlang der Längsachse schwimmend an der Fahrzeugleuchte, vorzugsweise deren Leuchtengehäuse angeordnet ist,
- der Spannkonus unter Aufweitung der Spreizhülse entlang der Längsachse beweglich in der Spreizhülse aufgenommen ist, und zunächst gemeinsam mit dieser entlang der Längsachse schwimmend an der Fahrzeugleuchte - vornehmlich deren Leuchtengehäuse - angeordnet ist,
- das Zusammenwirken des Befestigungsmittels und des Spannkonus je nach Betätigungsrichtung eine Vergrößerung oder eine Verkleinerung des Abstands zwischen dem Befestigungsmittel und dem Spannkonus bewirkt,
- mit zunehmender Verkleinerung des Abstands zwischen Befestigungsmittel und Spannkonus die Spreizhülse zur Anlage am Fahrzeug kommt - vornehmliche einer eine Einbauöffnung für die Fahrzeugleuchte begrenzenden Karosseriewandung - und schließlich nur noch der Spannkonus durch weitere Betätigung des Befestigungsmittels unter Aufweitung des Spreizhülse entlang der Längsachse beweglich ist, so dass schließlich das Befestigungsmittel die Vorrichtung am Fahrzeug unter unbeweglicher Festlegung an der Fahrzeugleuchte durch Aufweitung der Spreizhülse in einer einmal eingenommenen Position entlang der Längsachse festliegt.

Mit anderen Worten sieht das Zusammenwirken von Befestigungsmittel und Spannkonus vor, dass sich eine Betätigung des Befestigungsmittels abstandsveränderlich auf die Position des Spannkonus entlang der Längsachse gegenüber dem Befestigungsmittel beziehungsweise dessen Befestigungspunkt am Gegenpart der Fahrzeugleuchte auswirkt.

Die Spreizhülse ist zusätzlich zu ihrer schwimmenden Anordnung in unaufgeweitetem Zustand entlang der Längsachse in Richtung einer normal zur Längsachse verlaufenden Verschiebeachse ebenfalls schwimmend an der Fahrzeugleuchte angeordnet. Die Spreizhülse weitet sich unter Einwirkung des Spannkonus bei abstandsverringernder Betätigung des Befestigungsmittels in Richtung einer sowohl normal auf der Längsachse, als auch normal auf der Verschiebeachse aufstehenden Ausdehnungsachse.

Das Verfahren zur wenigstens teilweisen Befestigung einer Fahrzeugleuchte in einer Einbauöffnung sieht zuerst eine zunächst schwimmende Anordnung wenigstens einer Vorrichtung zur wenigstens teilweisen Befestigung einer Fahrzeugleuchte in einer Aufnahme wenigstens einer Vorrichtung zur wenigstens teilweisen Befestigung einer Fahrzeugleuchte an einem Fahrzeug an der Fahrzeugleuchte oder am Fahrzeug vor.

Im nachfolgenden wird nur noch Bezug genommen auf eine schwimmende Anordnung an der Fahrzeugleuchte, ohne dass dies eine Beschränkung dahingehend bildet, dass nicht auch eine schwimmende Anordnung am Fahrzeug, insbesondere an einer eine Einbauöffnung für eine Fahrzeugleuchte begrenzende Karosseriewandung zum selben gewünschten Ergebnis führen kann, es sei denn, es ist explizit etwas anderes erwähnt.

Die Vorrichtung umfasst eine Spreizhülse und einen entlang einer Längsachse unter Aufweitung der Spreizhülse beweglich in dieser aufgenommenen Spannkonus, und ein mit dem Spannkonus zusammenwirkendes Befestigungsmittel.

Die Vorrichtung ist mit ihrer Spreizhülse und mit dem von dieser aufgenommenen Spannkonus zunächst zumindest entlang der Längsachse, zusätzlich gegebenenfalls in Richtung einer normal zur Längsachse verlaufenden Verschiebeachse, schwimmend an der Fahrzeugleuchte angeordnet.

Das Befestigungsmittel wird an einem fahrzeugseitigen Befestigungspunkt beispielsweise unter Durchführung durch eine den Befestigungspunkt bildenden Befestigungsöffnung an einer eine zum Einbau der Fahrzeugleuchte fahrzeugseitig vorgesehene Einbauöffnung begrenzenden Karosseriewandung zumindest unter Begrenzung seiner freien Beweglichkeit in Richtung zur Fahrzeugleuchte hin angeordnet. Ein Beispiel hierfür ist die rückwärtige Durchführung einer Schraube durch eine entsprechende Befestigungsöffnung, wobei deren Gewindeabschnitt zur Fahrzeugleuchte hin reicht, und deren Kopf verhindert, dass die Schraube durch die Befestigungsöffnung zur Fahrzeugleuchte hin gezogen werden kann.

Anschließend wird die Fahrzeugleuchte unter Einsatz einer diese lage- und positionsgenau beispielsweise in einer Einbauöffnung am Fahrzeug ausrichtenden Lehre am Fahrzeug angeordnet.

Dann wird das Befestigungsmittel mit dem Spannkonus in Verbindung gebracht und durch sich in Richtung der Längsachse abstandsverringernd auf den Abstand zwischen Befestigungspunkt des Befestigungsmittels am Fahrzeug und dem Spannkonus auswirkende Betätigung des Befestigungsmittels zuerst die zunächst entlang der Längsachse schwimmend an der Fahrzeugleuchte angeordnete Spreizhülse zur Anlage am Fahrzeug, beispielsweise an dessen die zur Aufnahme der Fahrzeugleuchte vorgesehene Einbauöffnung begrenzender Karosseriewandung gebracht.

Die Spreizhülse ist zusätzlich in Richtung einer normal zur Längsachse verlaufenden Verschiebeachse schwimmend an der Fahrzeugleuchte angeordnet, so findet hierbei zugleich eine Ausrichtung entlang der Verschiebeachse statt, am Ende welcher Ausrichtung die Vorrichtung derart positioniert ist, dass die Längsachse sich entlang der kürzesten Entfernung zwischen Befestigungspunkt und der schwimmenden Anordnung der Spreizhülse an der Fahrzeugleuchte erstreckt.

Liegt die Spreizhülse schließlich am Fahrzeug an, so wird durch weitere abstandsverringernde Betätigung des Befestigungsmittels der Spannkonus nunmehr ohne weitere Verschiebung der Spreizhülse näher zum Befestigungspunkt verbracht. Hierbei findet eine Aufweitung der Spreizhülse statt. Hierbei erfolgt eine Festlegung der Relativposition der Spreizhülse an der Fahrzeugleuchte vermittels Aufweitung der Spreizhülse durch den relativ zu dieser bewegten Spannkonus.

Bei dieser Festlegung wird die vormals schwimmende Anordnung der Spreizhülse an der Fahrzeugleuchte aufgehoben. Durch die Aufweitung der Spreizhülse ist diese ortsfest und unbeweglich an der Fahrzeugleuchte angeordnet.

Ist die Fahrzeugleuchte hiernach lage- und positionsgenau am Fahrzeug festgelegt, kann die Lehre entfernt werden.

Das Verfahren endet hiernach.

Es ist ersichtlich, dass die Erfindung durch ein selbst einstellendes Toleranzausgleichs- und Befestigungselement mit einem einen Spreiz- und einen entlang einer Längsachse unter Aufweitung des Spreizkonus in diesem beweglich angeordneten Spannkonus umfassenden Einstellelement, welches in einer Aufnahme zumindest entlang der Längsachse zunächst schwimmend gelagert ist, verwirklicht sein kann.

Die Aufnahme ist an einem der miteinander zu verbindenden Bauteile vorgesehen. Ist das Toleranzausgleichs- und Befestigungselement zur Befestigung einer Fahrzeugleuchte an einem Fahrzeug vorgesehen, so kann die Aufnahme an der Fahrzeugleuchte oder am Fahrzeug vorgesehen sein.

Durch den Spreiz- und den Spannkonus wird das Einstellelement beim Anschrauben positionsgenau in der Aufnahme fixiert.

Vorteile gegenüber dem Stand der Technik ergeben sich durch eine einfache Ausführung, eine selbstständige Einstellung, sowie eine Verwendbarkeit in Verbindung mit Standard-Befestigungsmitteln, wie etwa mit Schrauben/Mutter und Stehbolzen/Mutter.

Zusätzliche, über eine vollständige Lösung der gestellten Aufgabe unter Beseitigung der Nachteile des Standes der Technik hinausgehende Vorteile sind, dass kein Einstellen notwendig ist. Darüber hinaus kann auf Standard-Befestigungsmittel zur Verspannung des Spreiz- und einem Spannkonus zurückgegriffen werden. Funktioniert mit Schrauben und Muttern und angeformten Gewindebolzen, ist kostengünstig.

Die Vorrichtung kann einzelne oder eine Kombination der zuvor und/oder nachfolgend in Verbindung mit der Fahrzeugleuchte und/oder dem Verfahren beschriebene Merkmale aufweisen, ebenso wie das Verfahren einzelne oder eine Kombination mehrerer zuvor und/oder nachfolgend in Verbindung mit der Vorrichtung und/oder der Fahrzeugleuchte beschriebene Merkmale aufweisen und/oder verwirklichen kann. Darüber hinaus kann die Fahrzeugleuchte einzelne oder eine Kombination der zuvor und/oder nachfolgend in Verbindung mit der Vorrichtung und/oder dem Verfahren beschriebene Merkmale aufweisen.

Die Erfindung einschließlich deren über die vollständige Lösung der gestellten Aufgabe und/oder über die voran zu den einzelnen Merkmalen genannten Vorteile hinausgehende Vorteile gegenüber dem Stand der Technik wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: ein erstes Ausführungsbeispiel einer Vorrichtung zur wenigstens teilweisen Befestigung einer Fahrzeugleuchte an einem Fahrzeug in einer Draufsicht.
- Fig. 2: die Vorrichtung aus Fig. 1 in einem Längsschnitt A - A.
- Fig. 3: ein zweites Ausführungsbeispiel einer Vorrichtung zur wenigstens teilweisen Befestigung einer Fahrzeugleuchte an einem Fahrzeug in einer Draufsicht.
- Fig. 4: die Vorrichtung aus Fig. 3 in einem Längsschnitt A - A.
- Fig. 5: ein drittes Ausführungsbeispiel einer Vorrichtung zur wenigstens teilweisen Befestigung einer Fahrzeugleuchte an einem Fahrzeug in einer Draufsicht.
- Fig. 6: die Vorrichtung aus Fig. 5 in einem Längsschnitt A - A.
- Fig. 7: ein viertes Ausführungsbeispiel einer Vorrichtung zur wenigstens teilweisen Befestigung einer Fahrzeugleuchte an einem Fahrzeug in einer Draufsicht.
- Fig. 8: die Vorrichtung aus Fig. 7 in einem Längsschnitt A - A.

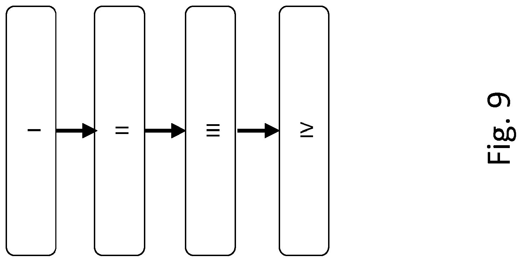

- Fig. 9: ein Ablaufdiagramm eines Verfahrens zur wenigstens teilweisen Befestigung einer Fahrzeugleuchte an einem Fahrzeug.

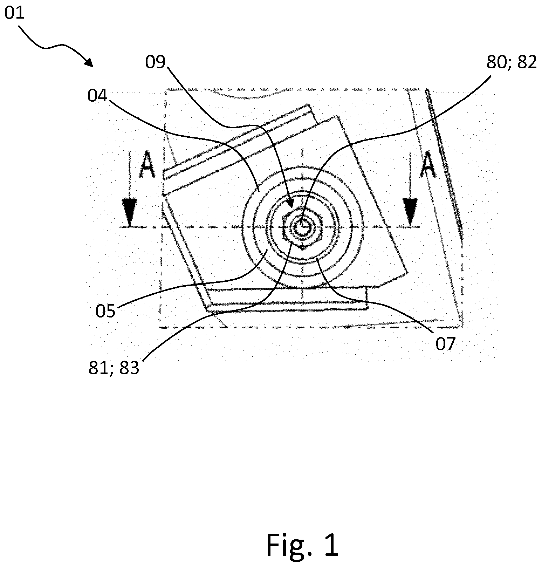

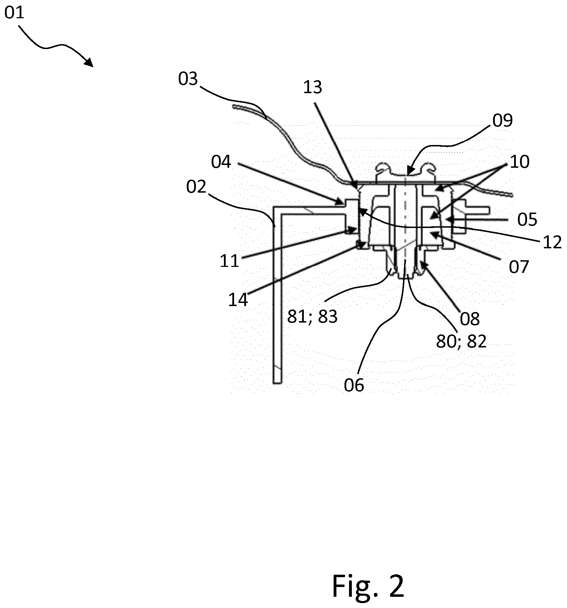

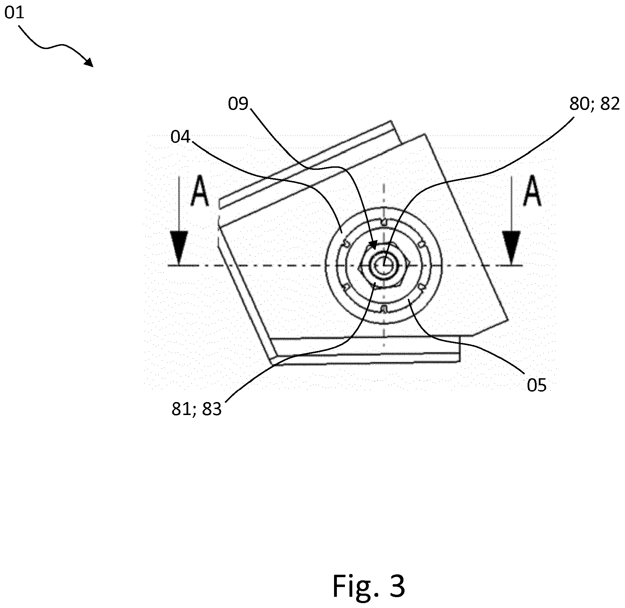

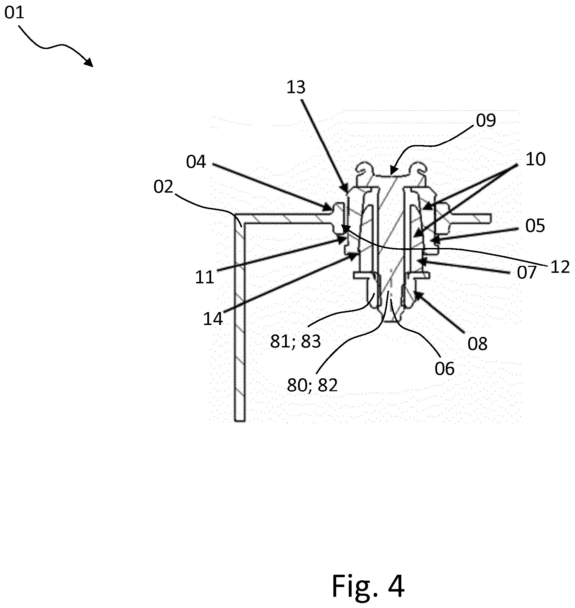

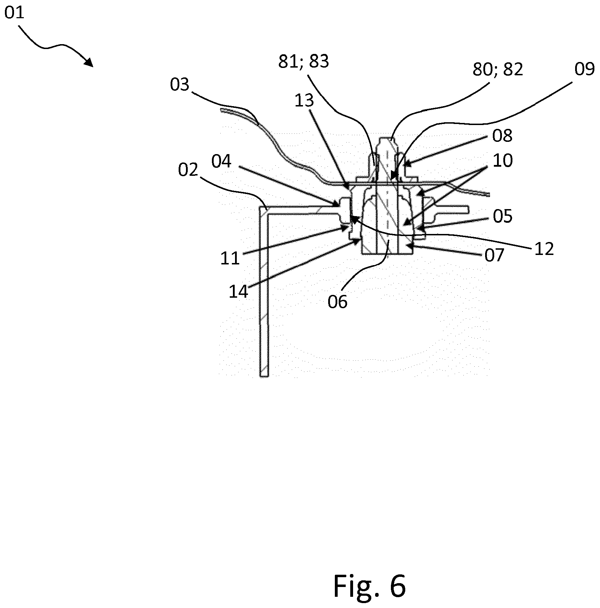

Eine in Fig. 1, Fig. 2, Fig. 3, Fig. 4, Fig. 5, Fig. 6, Fig. 7, Fig. 8 ganz oder in Teilen dargestellte Vorrichtung 01 zur wenigstens teilweisen Befestigung einer Fahrzeugleuchte, vorzugsweise mit deren Leuchtengehäuse 02 an einem Fahrzeug, insbesondere einer eine zum Einbau der Fahrzeugleuchte vorgesehene Einbauöffnung begrenzenden Karosseriewandung 03, umfasst:
- eine in einer Aufnahme 04 an einem der beiden durch Fahrzeugleuchte und Fahrzeug gebildeten Gegenparte anordbare und/oder angeordnete Spreizhülse 05,
- einen unter Aufweitung der Spreizhülse 05 entlang einer Längsachse 06 beweglich in der Spreizhülse 05 aufgenommen Spannkonus 07, und
- ein beispielsweise an einem Befestigungspunkt 09 am verbleibenden, anderen Gegenpart festlegbares und durch dessen Betätigung auf eine Position des Spannkonus 07 entlang der Längsachse 06 zu ihm, nämlich dem Befestigungspunkt, abstandsveränderlich wirkendes Befestigungsmittel 08.

Die Spreizhülse 05 ist in unaufgeweitetem Zustand in der Aufnahme 04 zumindest in Richtung entlang der Längsachse 06 schwimmend anordbar und/oder aufgenommen. In aufgeweitetem Zustand ist sie in der Aufnahme 04 in ihrer dann eingenommenen Position entlang der Längsachse 06 festlegbar und/oder festgelegt. Durch abstandsverringernd auf die Position des Spannkonus 07 zu ihm, insbesondere auf den Abstand zwischen dem Spannkonus 07 und dem Befestigungspunkt 09 des Befestigungsmittels 09 am verbleibenden, anderen Gegenpart wirkende Betätigung des Befestigungsmittels zunächst die Spreizhülse 05 zur Anlage am anderen Gegenpart bringbar ist und/oder gebracht wird und anschließend der Spannkonus 07 die Spreizhülse 05 aufweitet.

Die Vorrichtung 01 umfasst demnach eine Spreizhülse 05, einen unter Aufweitung der Spreizhülse 05 entlang einer Längsachse 06 beweglich in der Spreizhülse 05 aufgenommen Spannkonus 07, und ein auf eine Position des Spannkonus 07 entlang der Längsachse 06 zu ihm abstandsveränderlich wirkendes Befestigungsmittel 08.

Die Spreizhülse 05 ist in unaufgeweitetem Zustand zumindest entlang der Längsachse 06 schwimmend am einen Gegenpart, nämlich an der Fahrzeugleuchte - vorzugsweise deren Leuchtengehäuse 02 - oder am Fahrzeug - vorzugsweise einer eine Einbauöffnung für die Fahrzeugleuchte an der Karosserie des Fahrzeugs begrenzenden Karosseriewandung 03 - angeordnet.

Die Spreizhülse 05 wird durch abstandsverringernde Betätigung des Befestigungsmittels 08 zunächst am verbleibenden, anderen Gegenpart zu dem einen Gegenpart, an dem sie schwimmend angeordnet ist, entlang der Längsachse zum Anliegen gebracht, also am Fahrzeug bei schwimmender Anordnung an der Fahrzeugleuchte und an der Fahrzeugleuchte bei schwimmender Anordnung am Fahrzeug.

Die Spreizhülse 05 ist beziehungsweise wird in durch weitere abstandsverringernde Betätigung des Befestigungsmittels 08 erhaltenem aufgeweitetem Zustand in ihrer in unaufgeweitetem Zustand beziehungsweise vormals schwimmenden Anordnung unbeweglich festgelegt.

Die Vorrichtung 01 stellt zugleich einen Toleranzausgleich, als auch eine zuverlässige Befestigung einer Fahrzeugleuchte an einem Fahrzeug sicher.

Es ist ersichtlich, dass die Erfindung verwirklicht sein kann durch eine Vorrichtung 01, welche ein zunächst schwimmend aufgenommenes, die Spreizhülse 05 und den Spannkonus 07 umfassendes Einstellelement 10 umfasst, welches durch Betätigung eines mit dem Spannkonus 07 durch Veränderung dessen Abstands zu einem Befestigungspunkt 09 zusammenwirkenden, am Befestigungspunkt 09 festgelegten Befestigungsmittel 08 in einer Anlageposition unter Verlust seiner schwimmenden Anordnung fixiert wird.

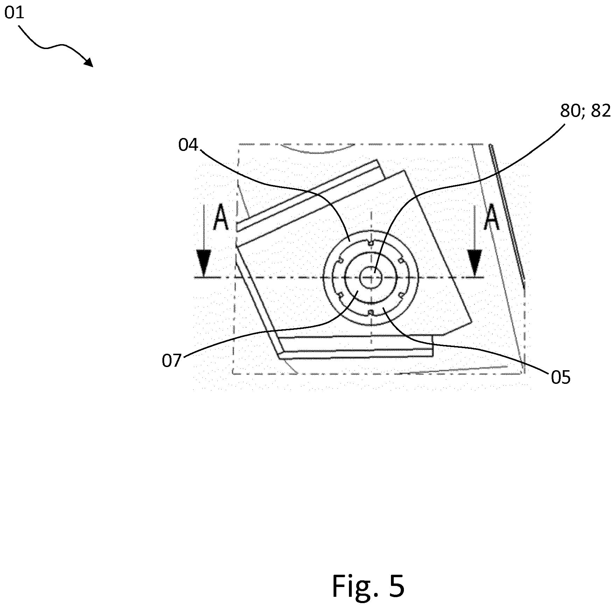

Durch die Spreizhülse 05 und den Spannkonus 07 wird das Einstellelement 10 beim Anschrauben positionsgenau in der Aufnahme 04 fixiert. Vorteil ist eine einfache Ausführung, dessen selbstständige Einstellung und dass es mit verschiedenen Befestigungsmitteln funktioniert, wie etwa Schrauben/Mutter und Stehbolzen/Mutter Kombination (Fig. 1, Fig. 2, Fig. 3, Fig. 4) oder mit integriertem Schraubbolzen/Mutter (Fig. 5, Fig. 6, Fig. 7, Fig. 8).

Die Vorrichtung 01 legt beim Einbau einer Fahrzeugleuchte in eine Einbauöffnung diese an der Karosseriewandung 03 in deren während des Einbaus mittels einer Lehre eingestellter Bündigkeit in eingebautem Zustand fest.

Beispielsweise umfasst die Vorrichtung 01
- einen sich entlang der Längsachse 06 erstreckenden, beispielsweise karosserieseitig angeordneten Bolzen 82 als ein erstes Befestigungselement 80 des Befestigungsmittels 08,
- eine in einer beispielsweise durch eine eine normal zu dem Bolzen 82 verlaufende Ebene aufspannenden Öffnung gebildeten Aufnahme 04 am Leuchtengehäuse 02 einer Fahrzeugleuchte in Richtung der Längsachse 06 schwimmend gelagerten ersten hohlzylinderförmigen Spreizhülse 05, deren Hohlzylinderachse mit der Längsachse des Bolzens 82 übereinstimmt, und deren innere Mantelfläche eine deren Innendurchmesser konusförmig verjüngende Partie aufweist, sowie
- einem zwischen der Spreizhülse 05 und dem Bolzen 82 angeordneten und in Richtung der Längsachse 06 schwimmend gegenüber dem Bolzen 82 gelagerten hohlzylinderförmigen Spannkonus 07, dessen Hohlzylinderachse ebenfalls mit der Längsachse 06 des Bolzens 82 übereinstimmt, und dessen äußere Mantelfläche eine dessen Außendurchmesser entgegen der verjüngenden Partie der Spreizhülse 05 konusförmig erweiternde Partie aufweist, sowie
- ein entlang der Längsachse 06 des Bolzens 82 gegenüber diesem festlegbares zweites Befestigungselement 81 des Befestigungsmittels 08, beispielsweise eine Gewindemutter 83, ein Federspannring, Kabelbinderverrastung, etc.

Die Spreizhülse 05 und der Spannkonus 07 sind zunächst schwimmend vorzugsweise am Leuchtengehäuse 02 und relativ zueinander angeordnet. Sie werden erst mittels eines der Befestigungselemente des Befestigungsmittels 08 in einer Lage gegeneinander verspannt, in welcher sie das Leuchtengehäuse 02 in einer per Lehre während des Einbaus ausgerichteten Position in der Einbauöffnung festlegen.

Das Befestigungssystem ermöglicht, beim Einbau einer Fahrzeugleuchte in eine Einbauöffnung diese in einem abhhängig von deren während des Einbaus mittels einer Lehre eingestellter Bündigkeit in eingebautem Zustand in Abhängigkeit von den Fertigungstoleranzen veränderlichen Abstand zu einer beispielsweise rückwärtigen Karosseriewandung 03 festzulegen.

Ein in einer Aufnahme 04 beweglich aufgenommenes Einstellelement 10, welches aus Spannkonus 07 und Spreizhülse 05 besteht wird bei der Befestigung eines Bauteils, insbesondere einer Fahrzeugleuchte, mittels eines beispielsweise Schraube und/oder Mutter umfassenden Befestigungsmittels 08 ineinander gedrückt. Dadurch wird die Spreizhülse 05 geweitet und verklemmt sich in der Aufnahme 04 des Bauteils in der ausgerichteten Lage des Bauteils. Dadurch ist das Einstellelement 10 nicht mehr verschiebbar und das Bauteil in seiner Lage fixiert. Rillen 11 an der Spreizhülse 05 und eine Verzahnung 12 an der Aufnahme 04 sorgen für eine formschlüssige Verbindung beim Aufweiten der Spreizhülse 05 und ineinander Quetschen von Spannkonus 07 und Spreizhülse 05. Durch Rastnasen 13 an der Spreizhülse 05 oder an der Aufnahme 04 wird eine Verliersicherung bis zum Einbau gewährleistet. Das Einstellelement 10 wird durch Rastnasen 14 in seiner Vormontage Stellung gehalten.

Die Spreizhülse 05 ist in unaufgeweitetem Zustand in der Aufnahme 04 zusätzlich zu ihrer schwimmenden Anordnung entlang der Längsachse 06 in Richtung einer normal zur Längsachse 06 verlaufenden Verschiebeachse ebenfalls schwimmend an der Fahrzeugleuchte oder am Fahrzeug aufgenommen.

Die Spreizhülse 05 weitet sich unter Einwirkung des Spannkonus 07 bei abstandsverringernder Betätigung des Befestigungsmittels 08 in Richtung einer sowohl normal auf der Längsachse 06, als auch normal auf der Verschiebeachse aufstehenden Ausdehnungsachse.

Die Spreizhülse 05 weitet sich hiernach unter Einwirkung des Spannkonus 07 bei abstandsverringernder Betätigung des Befestigungsmittels 08 in Richtung einer sowohl normal auf der Längsachse 06, als auch normal auf der Verschiebeachse aufstehenden Ausdehnungsachse.

Das Befestigungsmittel 08 kann zwei miteinander zusammenwirkende Befestigungselemente 80, 81 umfassen, beispielsweise einen Gewindebolzen 82 und eine Gewindemutter 83, einen Glattbolzen und eine gegen Abzug vom Glattbolzen selbsthemmende Klemmscheibe, ähnlich einem Kabelbinder einen Riffelbolzen und eine gegen Abzug vom Riffelbolzen wirkende Raste.

Bevorzugt umfasst das Befestigungsmittel einen Gewindebolzen 82 und eine Gewindemutter 83.

Der Spannkonus 07 kann eines der Befestigungselemente 80, 81 umfassen, beispielsweise einen Gewindebolzen 82 oder eine Gewindemutter 83, oder von einem der Befestigungselemente 80, 81 umfasst sein.

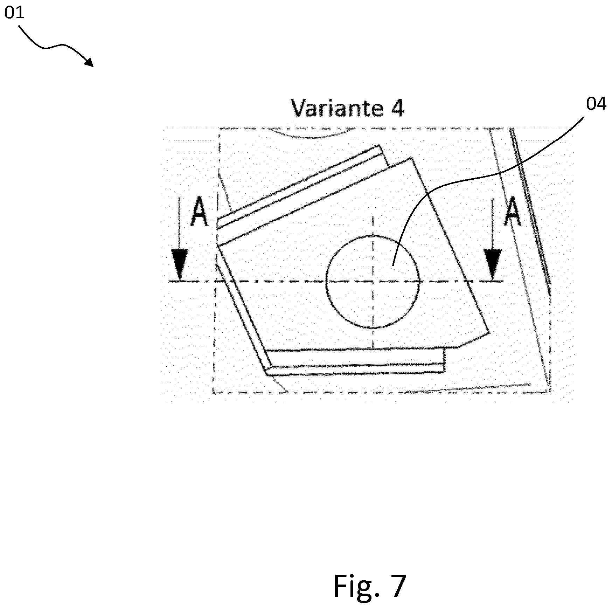

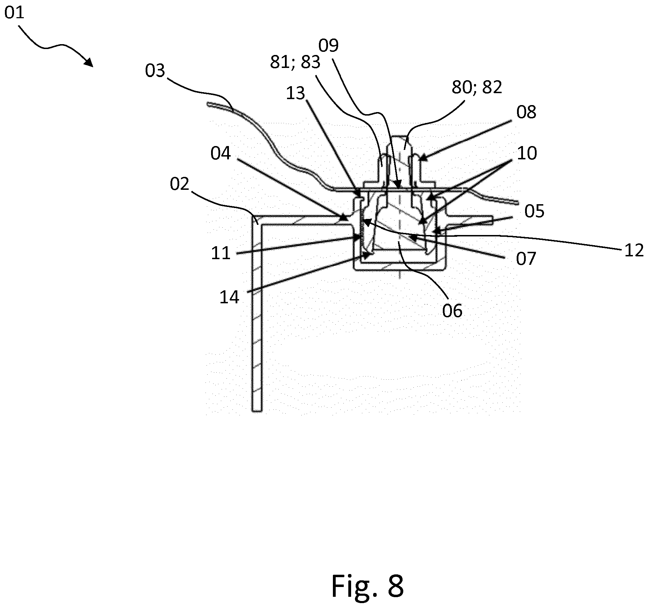

Fig. 7 und Fig. 8 zeigen eine Ausgestaltung, bei der der Spannkonus 07 einen Gewindebolzen 82 umfasst. Dabei kann der Spannkonus 07 wie in Fig. 8 dargestellt einstückig mit dem Gewindebolzen 82 ausgeführt sein.

Die Spreizhülse 05 kann außen zur Aufnahme 04 am einen Gegenpart hin eine beispielsweise durch Rillen 11 gebildete Riffelung aufweisen, welche bei einer Aufweitung der Spreizhülse 05 die schwimmende Anordnung in der Aufnahme 04 hemmt und schließlich aufhebt.

Zwischen Spreizhülse 05 und Spannkonus 07 kann eine beispielsweise ebenfalls durch Rillen gebildete Riffelung vorgesehen sein, welche den Spannkonus 07, sobald dieser die Spreizhülse 05 aufweitet, in der Spreizhülse 05 zumindest gegen abstandsvergrößerndes Zurückweichen festsetzt.

Der Spannkonus 07 ist bevorzugt verliersicher in der Spreizhülse 05 angeordnet. Dies kann durch eine vermittels eines beispielsweise eine Rastnase 14 umfassenden inneren Rastabschnitts begrenzte konusförmige Partie einer mit dem Spannkonus 07 zusammenwirkenden inneren Mantelfläche der Spreizhülse 05 vorgenommen sein, welcher innere Rastabschnitt so weit in eine von der konusförmigen Partie umgebene Aufnahmeöffnung ragt, dass ein hierin aufgenommener Spannkonus 07 den Rastabschnitt nicht aus eigener Kraft passieren kann.

Vorzugsweise ist die Spreizhülse 05 verliersicher in der Aufnahme 04 am einen Gegenpart angeordnet.

Dies kann beispielsweise verwirklicht sein, indem die äußere Mantelfläche der Spreizhülse 05 bevorzugt einen mittleren Mantelflächenabschnitt in Form eines geraden, allgemeinen Zylinders aufweist, dessen Zylinderachse sich parallel zur Längsachse 06 erstreckt. In beiden Richtungen entlang der Längsachse 06 gesehen weist die äußere Mantelfläche der Spreizhülse 05 auf beiden Seiten des mittleren Mantelflächenabschnitts jeweils einen zum mittleren Mantelflächenabschnitt hin wirkenden, beispielsweise jeweils eine Rastnase 13 umfassenden äußeren Rastabschnitt auf. In den äußeren Rastabschnitten ist der Abstand der äußeren Mantelfläche zur Längsachse 06 in wenigstens einer Richtung normal zur Längsachse 06 größer, als im mittleren Mantelflächenabsch n itt.

Die beiden äußeren Rastabschnitte erlauben in unaufgeweitetem Zustand der Spreizhülse 05 eine verliersichere, in Richtung der Längsachse 06 schwimmende Anordnung der Spreizhülse 05 in einer in ihren Querschnittsabmessungen mit den Querschnittsabmessungen des mittleren Mantelflächenabschnitts normal zur Längsachse korrespondierenden, beispielsweise durch eine Öffnung einer Fahrzeugleuchte oder in einer entsprechend korrespondierenden Öffnung in einer eine Einbauöffnung für die Fahrzeugleuchte begrenzenden Karosseriewandung gebildeten Aufnahme 04.

Zusammengefasst umfasst die Vorrichtung 01 demnach beispielsweise einen sich entlang einer Längsachse 06 erstreckenden Bolzen, beispielsweise einem Gewindebolzen 82, und ein mit dem Bolzen zusammenwirkendes Befestigungselement 81, beispielsweise einer Mutter 83.

Denkbare Kombinationen von Bolzen und mit diesem zusammenwirkendem Befestigungselement sind beispielsweise Gewindebolzen und Gewindemutter, Glattbolzen und gegen Abzug vom Glattbolzen selbsthemmende Klemmscheibe, Riffelbolzen und gegen Abzug vom Riffelbolzen wirkende Raste, ähnlich einem Kabelbinder.

Die Vorrichtung 01 umfasst außerdem einen entlang der Längsachse 06 des Bolzens beweglich angeordneten Spannkonus 07.

Darüber hinaus umfasst die Vorrichtung 01 eine beispielsweise hohlzylinderförmige Spreizhülse 05 mit einer bevorzugt zu einem kurz als geschlossenes Ende bezeichneten ersten Ende der Spreizhülse 05 hin von einem Boden beispielsweise mit einer zentralen Öffnung zur Durchführung des gegebenenfalls vorgesehenen Bolzens begrenzten kegelabschnittförmigen Partie ihrer inneren Mantelfläche. Die kegelabschnittförmige Partie der inneren Mantelfläche der Spreizhülse 05 korrelliert mit der äußeren Gestalt des Spannkonus 07 dahingehend, dass dieser zumindest im weitesten Abschnitt der kegelabschnittförmigen Partie frei von einer Verformung der Spreizhülse 05 aufgenommen werden kann.

Gegenüberliegend dem geschlossenen beziehungsweise ersten Ende weist die Spreizhülse 05 ein kurz als offenes Ende bezeichnetes zweites Ende auf. Sowohl die Hohlzylinderachse der hohlzylinderförmigen Spreizhülse 05, als auch das Lot der kegelabschnittförmigen Partie erstrecken sich vom ersten Ende zum gegenüberliegenden zweiten Ende der Spreizhülse 05 entlang der Längsachse 06 des Bolzens. Die Längsachse 06 steht normal auf einer von einem Rand der zentralen Öffnung im Boden aufgespannten Fläche auf. Die kegelabschnittförmige Partie der inneren Mantelfläche der Spreizhülse 05 umfasst wenigstens einen Abschnitt, dessen kurz als Innendurchmesser bezeichnete Innenabmessung sich in wenigstens einer Richtung normal zur Längsachse 06 von dem offenen Ende der Spreizhülse 05 hin zum geschlossenen Ende konusartig verjüngt.

Zum offenen Ende hin ist die kegelabschnittförmige Partie vorzugsweise durch einen inneren Rastabschnitt begrenzt, in dem der Abstand der inneren Mantelfläche zur Längsachse 06 in wenigstens einer Richtung normal zur Längsachse 06 kleiner ist, als auf der dem offenen Ende zugewandten Seite in der kegelabschnittförmigen Partie.

Der innere Rastabschnitt erlaubt eine verliersichere, in Richtung der Längsachse 06 schwimmende Lagerung des Spannkonus 07 in der Spreizhülse 05.

Die äußere Mantelfläche der Spreizhülse 05 weist bevorzugt einen mittleren Mantelflächenabschnitt in Form eines geraden, allgemeinen Zylinders auf, dessen Zylinderachse sich parallel zur Längsachse 06 erstreckt. In beiden Richtungen entlang der Längsachse 06 gesehen weist die äußere Mantelfläche der Spreizhülse 05 auf beiden Seiten des mittleren Mantelflächenabschnitts jeweils einen zum mittleren Mantelflächenabschnitt hin wirkenden äußeren Rastabschnitt auf. In den äußeren Rastabschnitten ist der Abstand der äußeren Mantelfläche zur Längsachse 06 in wenigstens einer Richtung normal zur Längsachse 06 größer, als im mittleren Mantelflächenabsch n itt.

Die beiden äußeren Rastabschnitte erlauben eine verliersichere, in Richtung der Längsachse 06 in unaufgeweitetem Zustand der Spreizhülse 05 schwimmende Anordnung der Spreizhülse 05 in einer in ihren Querschnittsabmessungen mit den Querschnittsabmessungen des mittleren Mantelflächenabschnitts normal zur Längsachse 06 korrespondierenden, beispielsweise durch eine Öffnung einer Fahrzeugleuchte oder in einer entsprechend korrespondierenden Öffnung in einer eine Einbauöffnung für die Fahrzeugleuchte begrenzenden Karosseriewandung 03 gebildeten Aufnahme.

Der Spannkonus 07 kann eine zentrale Öffnung zur Durchführung eines beispielsweise als Bolzen, bevorzugt als Gewindebolzen 82 ausgeführten Befestigungselements 80 aufweisen.

Alternativ kann der Spannkonus 07 mit dem Bolzen verbunden und mit diesem gemeinsam entlang der Längsachse des Bolzens zunächst schwimmend beweglich angeordnet sein (Fig. 7, Fig. 8). In diesem Fall bildet die Vorrichtung eine im Umgang besonders einfach handhabbare Einheit, da der Spannkonus 07 gemeinsam mit dem Bolzen verliersicher in der Spreizhülse 05 angeordnet ist und die Spreizhülse 05 mit dem von ihr verliersicher aufgenommenen Spannkonus 07 leuchten- oder fahrzeugseitig zunächst bis zur positionsgenauen Ausrichtung von Fahrzeugleuchte relativ zum Fahrzeug verliersicher in Richtung der Längsachse 06 schwimmend gehalten ist.

Es ist ersichtlich, dass die Erfindung in Zusammenhang mit einer Fahrzeugleuchte verwirklicht sein kann, welche eine zuvor beschriebene Vorrichtung 01 zu ihrer wenigstens teilweisen Befestigung an einem Fahrzeugumfasst.

Die Erfindung umfasst daher auch eine Fahrzeugleuchte mit mindestens einer an ihr angeordneten Vorrichtung 01 zu deren wenigstens teilweisen Befestigung an einem Fahrzeug, beispielsweise an einer eine Einbauöffnung begrenzenden Karosseriewandung 03.

Die Fahrzeugleuchte weist einen von einem Leuchtengehäuse 02 und einer Lichtscheibe ganz oder teilweise umschlossenen Leuchteninnenraum und mindestens ein darin zumindest teilweise beherbergtes, mindestens eine Lichtquelle umfassendes Leuchtmittel für wenigstens eine Lichtfunktion auf.

Besonders bevorzugt umfasst die Fahrzeugleuchte die Aufnahme 04 für die Spreizhülse 05.

Vorteilhaft ist die Aufnahme 04 am Leuchtengehäuse 02 angeordnet.

Die Vorrichtung 01 der Fahrzeugleuchte umfasst eine Spreizhülse 05, einen entlang einer Längsachse 06 unter Aufweitung der Spreizhülse 05 beweglich in dieser aufgenommenen Spannkonus 07, und ein mit dem Spannkonus 07 zusammenwirkendes Befestigungsmittel 08.

Die Spreizhülse 05 ist in unaufgeweitetem Zustand zumindest entlang der Längsachse 06 schwimmend bevorzugt an der Fahrzeugleuchte, vorzugsweise deren Leuchtengehäuse 02 angeordnet.

Der Spannkonus 07 ist unter Aufweitung der Spreizhülse 05 entlang der Längsachse 06 beweglich in der Spreizhülse 05 aufgenommen und zunächst gemeinsam mit dieser entlang der Längsachse 06 schwimmend an der Fahrzeugleuchte - vornehmlich deren Leuchtengehäuse 02 - angeordnet.

Das Zusammenwirken des Befestigungsmittels 08 und des Spannkonus 07 bewirkt je nach Betätigungsrichtung eine Vergrößerung oder eine Verkleinerung des Abstands zwischen einem Befestigungspunkt 09, an dem das Befestigungsmittel 08 vorzugsweise fahrzeugseitig festgelegt ist, und dem Spannkonus 07. Mit zunehmender Verkleinerung des Abstands zwischen dem Befestigungspunkt 09 des Befestigungsmittels 08 und Spannkonus 07 kommt die Spreizhülse 05 zur Anlage am Fahrzeug - vornehmliche einer eine Einbauöffnung für die Fahrzeugleuchte begrenzenden Karosseriewandung 03. Schließlich ist nur noch der Spannkonus 07 durch weitere abstandsverringernde Betätigung des Befestigungsmittels 08 unter Aufweitung des Spreizhülse 05 entlang der Längsachse 06 beweglich, so dass schließlich das Befestigungsmittel 08 die Vorrichtung 01 am Fahrzeug unter unbeweglicher Festlegung an der Fahrzeugleuchte durch Aufweitung der Spreizhülse 05 in einer einmal eingenommenen Position entlang der Längsachse 06 festliegt.

Mit anderen Worten sieht das Zusammenwirken von Befestigungsmittel 08 und Spannkonus 07 vor, dass sich eine Betätigung des Befestigungsmittels 08 abstandsveränderlich auf die Position des Spannkonus 07 entlang der Längsachse 06 gegenüber dem Befestigungsmittel 08 beziehungsweise dessen Befestigungspunkt 09 am Gegenpart der Fahrzeugleuchte auswirkt.

Erfindungsgemäß ist die Spreizhülse 05 zusätzlich zu ihrer schwimmenden Anordnung in unaufgeweitetem Zustand entlang der Längsachse 06 in Richtung einer normal zur Längsachse 06 verlaufenden Verschiebeachse ebenfalls schwimmend an der Fahrzeugleuchte angeordnet. Die Spreizhülse 05 weitet sich unter Einwirkung des Spannkonus 07 bei abstandsverringernder Betätigung des Befestigungsmittels 08 in Richtung einer sowohl normal auf der Längsachse 06 als auch normal auf der Verschiebeachse aufstehenden Ausdehnungsachse.

Ebenfalls ersichtlich ist, dass die Erfindung unter Einsatz einer voranstehend beschriebenen Vorrichtung 01 und/oder einer ebenfalls voranstehend beschriebenen Fahrzeugleuchte durch ein Verfahren zur wenigstens teilweisen Befestigung einer Fahrzeugleuchte an einem Fahrzeug, vornehmlich in einer Einbauöffnung, verwirklicht sein kann, wobei Fahrzeugleuchte und Fahrzeug jeweils einen Gegenpart zueinander bilden.

Das Verfahren sieht in einem ersten Verfahrensschritt I vor, dass eine voranstehend beschriebene Vorrichtung 01 zur wenigstens teilweisen Befestigung einer Fahrzeugleuchte an einem Fahrzeug mit ihrer Spreizhülse 05 und mit dem von dieser aufgenommenen Spannkonus 07 zunächst zumindest entlang der Längsachse 06, danach auch in Richtung einer normal zur Längsachse 06 verlaufenden Verschiebeachse, schwimmend am einen Gegenpart angeordnet wird, entsprechend an der Fahrzeugleuchte oder am Fahrzeug.

In einem auf den ersten Verfahrensschritt I folgenden zweiten Verfahrensschritt II sieht das Verfahren vor, dass das Befestigungsmittel 08 an dem den anderen Gegenpart zur Fahrzeugleuchte bildenden Fahrzeug oder an der den anderen Gegenpart zum Fahrzeug bildenden Fahrzeugleuchte unter Begrenzung seiner freien Beweglichkeit zumindest in Richtung zum einen Gegenpart hin angeordnet wird. Der Ort der Festlegung des Befestigungsmittels 08 unter Begrenzung seiner freien Beweglichkeit zumindest in Richtung zum einen Gegenpart hin wird fortan als Befestigungspunkt 09 bezeichnet.

In einem auf den zweiten Verfahrensschritt II folgenden dritten Verfahrensschritt III sieht das Verfahren vor, dass die Fahrzeugleuchte beispielsweise unter Einsatz einer diese beispielsweise in einer Einbauöffnung am Fahrzeug ausrichtenden Lehre lage- und positionsgenau gegenüber dem Fahrzeug angeordnet wird.

In einem auf den dritten Verfahrensschritt III folgenden vierten Verfahrensschritt IV sieht das Verfahren vor, dass das Befestigungsmittel 08 mit dem Spannkonus 07 in Verbindung gebracht und durch sich in Richtung der Längsachse abstandsverringernd auf den Abstand zwischen Befestigungspunkt 09 des Befestigungsmittels 08 am Fahrzeug und dem Spannkonus 07 auswirkende Betätigung des Befestigungsmittels 08 zuerst die zunächst entlang der Längsachse 06 schwimmend am einen Gegenpart, beispielsweise an der Fahrzeugleuchte, angeordnete Spreizhülse 05 zur Anlage am anderen Gegenpart, beispielsweise am Fahrzeug, beispielsweise an dessen die zur Aufnahme der Fahrzeugleuchte vorgesehene Einbauöffnung begrenzender Karosseriewandung 03, gebracht wird, daraufhin durch weitere abstandsverringernde Betätigung des Befestigungsmittels 08 der Spannkonus 07 nunmehr ohne weitere Verschiebung der Spreizhülse 05 die Spreizhülse 05 aufweitet, wodurch die vormals schwimmend am einen Gegenpart aufgenommene Spreizhülse 05 in ihrer nunmehr am anderen Gegenpart anliegenden Relativposition am einen Gegenpart festgelegt wird.

Das Verfahren sieht demnach zuerst eine zunächst schwimmende Anordnung wenigstens einer Vorrichtung 01 zur wenigstens teilweisen Befestigung einer Fahrzeugleuchte in einer Aufnahme an einem Fahrzeug an der Fahrzeugleuchte oder am Fahrzeug vor.

Im nachfolgenden wird nur noch Bezug genommen auf eine schwimmende Anordnung an der Fahrzeugleuchte, ohne dass dies eine Beschränkung dahingehend bildet, dass nicht auch eine schwimmende Anordnung am Fahrzeug, insbesondere an einer eine Einbauöffnung für eine Fahrzeugleuchte begrenzende Karosseriewandung 03 zum selben gewünschten Ergebnis führen kann, es sei denn, es ist explizit etwas anderes erwähnt.

Die Vorrichtung 01 umfasst eine Spreizhülse 05 und einen entlang einer Längsachse 06 unter Aufweitung der Spreizhülse 05 beweglich in dieser aufgenommenen Spannkonus 07, und ein mit dem Spannkonus 07 zusammenwirkendes Befestigungsmittel 08.

Die Vorrichtung 01 ist mit ihrer Spreizhülse 05 und mit dem von dieser aufgenommenen Spannkonus 07 in unaufgeweitetem Zustand zunächst zumindest entlang der Längsachse 06 und danach auch in Richtung einer normal zur Längsachse 06 verlaufenden Verschiebeachse, schwimmend an der Fahrzeugleuchte angeordnet.

Das Befestigungsmittel 08 wird an einem fahrzeugseitigen Befestigungspunkt 09 beispielsweise unter Durchführung durch eine den Befestigungspunkt 09 bildenden Befestigungsöffnung an einer eine zum Einbau der Fahrzeugleuchte fahrzeugseitig vorgesehene Einbauöffnung begrenzenden Karosseriewandung 03 zumindest unter Begrenzung seiner freien Beweglichkeit in Richtung zur Fahrzeugleuchte hin angeordnet. Ein Beispiel hierfür ist die rückwärtige Durchführung einer Schraube durch eine entsprechende Befestigungsöffnung, wobei deren Gewindeabschnitt zur Fahrzeugleuchte hin reicht, und deren Kopf verhindert, dass die Schraube durch die Befestigungsöffnung zur Fahrzeugleuchte hin gezogen werden kann.

Anschließend wird die Fahrzeugleuchte unter Einsatz einer diese lage- und positionsgenau beispielsweise in einer Einbauöffnung am Fahrzeug ausrichtenden Lehre am Fahrzeug angeordnet.

Dann wird das Befestigungsmittel 08 mit dem Spannkonus in Verbindung gebracht und durch sich in Richtung der Längsachse 06 abstandsverringernd auf den Abstand zwischen Befestigungspunkt 09 des Befestigungsmittels 08 am Fahrzeug und dem Spannkonus 07 auswirkende Betätigung des Befestigungsmittels 08 zuerst die zunächst entlang der Längsachse schwimmend an der Fahrzeugleuchte angeordnete Spreizhülse 05 zur Anlage am Fahrzeug, beispielsweise an dessen die zur Aufnahme der Fahrzeugleuchte vorgesehene Einbauöffnung begrenzender Karosseriewandung 03 gebracht.

Die Spreizhülse 05 ist auch in Richtung einer normal zur Längsachse 06 verlaufenden Verschiebeachse schwimmend an der Fahrzeugleuchte angeordnet, so findet hierbei zugleich eine Ausrichtung entlang der Verschiebeachse statt, am Ende welcher Ausrichtung die Vorrichtung 01 derart positioniert ist, dass die Längsachse 06 sich entlang der kürzesten Entfernung zwischen Befestigungspunkt 09 und der schwimmenden Anordnung der Spreizhülse 05 an der Fahrzeugleuchte erstreckt.

Liegt die Spreizhülse 05 schließlich am Fahrzeug an, so wird durch weitere abstandsverringernde Betätigung des Befestigungsmittels 08 der Spannkonus 07 nunmehr ohne weitere Verschiebung der Spreizhülse 05 näher zum Befestigungspunkt 09 verbracht. Hierbei findet eine Aufweitung der Spreizhülse 05 statt. Hierbei erfolgt eine Festlegung der Relativposition der Spreizhülse 05 an der Fahrzeugleuchte vermittels Aufweitung der Spreizhülse 05 durch den relativ zu dieser bewegten Spannkonus 07.

Bei dieser Festlegung wird die vormals schwimmende Anordnung der Spreizhülse 05 an der Fahrzeugleuchte aufgehoben. Durch die Aufweitung der Spreizhülse 05 ist diese ortsfest und unbeweglich an der Fahrzeugleuchte angeordnet.

Ist die Fahrzeugleuchte hiernach lage- und positionsgenau am Fahrzeug festgelegt, kann die Lehre entfernt werden.

Das Verfahren endet hiernach.

Es ist ersichtlich, dass die Erfindung durch ein selbst einstellendes Toleranzausgleichs- und Befestigungselement mit einem einen Spreiz- und einen entlang einer Längsachse unter Aufweitung des Spreizkonus 05 in diesem beweglich angeordneten Spannkonus 07 umfassenden Einstellelement 10, welches in einer Aufnahme 04 zumindest entlang der Längsachse 06 zunächst schwimmend gelagert ist, verwirklicht sein kann.

Die Aufnahme 04 ist an einem der miteinander zu verbindenden Bauteile vorgesehen. Ist das Toleranzausgleichs- und Befestigungselement zur Befestigung einer Fahrzeugleuchte an einem Fahrzeug vorgesehen, so kann die Aufnahme an der Fahrzeugleuchte oder am Fahrzeug vorgesehen sein.

Durch den Spreiz- 05 und den Spannkonus 07 wird das Einstellelement 10 beim Anschrauben positionsgenau in der Aufnahme fixiert.

Vorteile gegenüber dem Stand der Technik ergeben sich durch eine einfache Ausführung, eine selbstständige Einstellung, sowie eine Verwendbarkeit in Verbindung mit Standard-Befestigungsmitteln, wie etwa mit Schrauben/Mutter und Stehbolzen/Mutter.

Zusätzliche, über eine vollständige Lösung der gestellten Aufgabe unter Beseitigung der Nachteile des Standes der Technik hinausgehende Vorteile sind, dass kein Einstellen notwendig ist. Darüber hinaus kann auf Standard-Befestigungsmittel zur Verspannung des Spreiz- und einem Spannkonus zurückgegriffen werden. Funktioniert mit Schrauben und Muttern 83 und angeformten Gewindebolzen 82, ist kostengünstig.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Vorrichtung
- 02: Leuchtengehäuse
- 03: Karosseriewandung
- 04: Aufnahme
- 05: Spreizhülse
- 06: Längsachse
- 07: Spannkonus
- 08: Befestigungsmittel
- 09: Befestigungspunkt
- 10: Einstellelement
- 11: Rillen
- 12: Verzahnung
- 13: Rastnasen
- 14: Rastnasen

## Patentansprüche

1. Vorrichtung (01) zur wenigstens teilweisen Befestigung einer Fahrzeugleuchte an einem Fahrzeug, wobei Fahrzeugleuchte und Fahrzeug jeweils einen Gegenpart zueinander bilden, umfassend:
- eine in einer Aufnahme (04) am einen Gegenpart anordbare Spreizhülse (05),
- einen unter Aufweitung der Spreizhülse (05) entlang einer Längsachse (06) beweglich in der Spreizhülse (05) aufgenommen Spannkonus (07), und
- ein am anderen Gegenpart festlegbares und durch dessen Betätigung auf eine Position des Spannkonus (07) entlang der Längsachse (06) abstandsveränderlich wirkendes Befestigungsmittel (08),
wobei die Spreizhülse (05) in unaufgeweitetem Zustand in der Aufnahme (04) zumindest in Richtung entlang der Längsachse (06) schwimmend aufgenommen ist und in aufgeweitetem Zustand in der Aufnahme (04) in ihrer dann eingenommenen Position entlang der Längsachse (06) festgelegt ist, und durch abstandsverringernd auf die Position des Spannkonus (07) wirkende Betätigung des Befestigungsmittels (08) zunächst die Spreizhülse (05) zur Anlage am Gegenpart gebracht wird und anschließend der Spannkonus (07) die Spreizhülse (05) aufweitet, **dadurch gekennzeichnet, dass** die Spreizhülse (05) in unaufgeweitetem Zustand in der Aufnahme (04) zusätzlich in Richtung einer normal zur Längsachse (06) verlaufenden Verschiebeachse schwimmend aufgenommen ist und sich die Spreizhülse (05) unter Einwirkung des Spannkonus (07) bei abstandsverringernder Betätigung des Befestigungsmittels (08) in Richtung einer sowohl normal auf der Längsachse (06), als auch normal auf der Verschiebeachse aufstehenden Ausdehnungsachse weitet.

2. Vorrichtung nach Anspruch 1, wobei das Befestigungsmittel (08) zwei miteinander zusammenwirkende Befestigungselemente (80, 81, 82, 83) umfasst.

3. Vorrichtung nach Anspruch 2, wobei das Befestigungsmittel (08) einen Gewindebolzen (82) und eine Gewindemutter (83) umfasst.

4. Vorrichtung nach Anspruch 2 oder 3, wobei der Spannkonus (07) eines der Befestigungselemente (80, 81, 82, 83) umfasst oder von einem der Befestigungselemente (80, 81, 82, 83) umfasst wird.

5. Vorrichtung nach einem der voranstehenden Ansprüche, wobei die Spreizhülse (05) außen eine Riffelung (11) aufweist.

6. Vorrichtung nach einem der voranstehenden Ansprüche, wobei zwischen Spreizhülse (05) und Spannkonus (07) eine Riffelung vorgesehen ist, welche den Spannkonus (07) sobald dieser die Spreizhülse (05) aufweitet, in der Spreizhülse (05) zumindest gegen Zurückweichen festsetzt.

7. Vorrichtung nach einem der voranstehenden Ansprüche, wobei sie eine vermittels eines inneren Rastabschnitts begrenzte konusförmige Partie einer mit dem Spannkonus zusammenwirkenden inneren Mantelfläche der Spreizhülse umfasst, welcher innere Rastabschnitt so weit in eine von der konusförmigen Partie umgebene Aufnahmeöffnung ragt, dass ein hierin aufgenommener Spannkonus den Rastabschnitt nicht aus eigener Kraft passieren kann.

8. Vorrichtung nach einem der voranstehenden Ansprüche, wobei eine äußere Mantelfläche der Spreizhülse (05) einen mittleren Mantelflächenabschnitt in Form eines geraden, allgemeinen Zylinders aufweist, dessen Zylinderachse sich parallel zur Längsachse (06) erstreckt, wobei die äußere Mantelfläche der Spreizhülse (05) auf beiden Seiten des mittleren Mantelflächenabschnitts in beiden Richtungen entlang der Längsachse (06) gesehen jeweils einen zum mittleren Mantelflächenabschnitt hin wirkenden, jeweils eine Rastnase (13) umfassenden äußeren Rastabschnitt aufweist, und wobei der Abstand der äußeren Mantelfläche zur Längsachse (06) in den äußeren Rastabschnitten in wenigstens einer Richtung normal zur Längsachse 06 größer ist, als im mittleren Mantelflächenabschnitt.

9. Fahrzeugleuchte mit einem von einem Leuchtengehäuse (02) und einer Lichtscheibe ganz oder teilweise umschlossenen Leuchteninnenraum und mindestens einem darin zumindest teilweise beherbergten, mindestens eine Lichtquelle umfassenden Leuchtmittel für wenigstens eine Lichtfunktion, umfassend mindestens eine Vorrichtung (01) nach einem der voranstehenden Ansprüche zu deren wenigstens teilweisen Befestigung an einem Fahrzeug.

10. Fahrzeugleuchte nach Anspruch 9, wobei sie die Aufnahme (04) umfasst.

11. Fahrzeugleuchte nach Anspruch 10, wobei die Aufnahme (04) am Leuchtengehäuse (02) angeordnet ist.

## Claims

1. A device (01) for the at least partial fastening of a vehicle lamp to a vehicle,
wherein vehicle lamp and vehicle each form a counterpart of the other, the device comprising:
- an expansion sleeve (05), which is arrangeable in a reception (04) at a counterpart,
- a clamping cone (07), which is received by expansion of the expansion sleeve (05) so as to be movable along a longitudinal axis (06) in the expansion sleeve (05), and
- a fastening means (08), which is fixable to the other counterpart, and which, by being actuated, acts upon a position of the clamping cone (07) along the longitudinal axis (06) in a distance-variable manner,
wherein the expansion sleeve (05) in its unexpanded state is received in the reception (04) so as to float at least in the direction along the longitudinal axis (06), and wherein the expansion sleeve (05) in its expanded state is fixed in the reception (04) in its then assumed position along the longitudinal axis (06) and wherein the expansion sleeve (05) is first brought into abutment on the counterpart by the fastening means (08) being actuated to act upon the position of the clamping cone (07) in a distance-reducing manner, and the clamping cone (07) subsequently expands the expansion sleeve (05), **characterised in that** the expansion sleeve (05) in its unexpanded state is received in the reception (04) so as to additionally float in the direction of a displacement axis extending orthogonal to the longitudinal axis (06), and, under action of the clamping cone (07) by the fastening means (08) being actuated in a distance-reducing manner, the expansion sleeve (05) expands in the direction of an expansion axis standing both orthogonal on the longitudinal axis (06) and orthogonal on the displacement axis.

2. The device according to claim 1, wherein the fastening means (08) comprises two fastening elements (80, 81, 82, 83) interacting with each other.

3. The device according to claim 2, wherein the fastening means (08) comprises a threaded bolt (82) and a threaded nut (83).

4. The device according to claim 2 or 3, wherein the clamping cone (07) comprises one of the fastening elements (80, 81, 82, 83) or is comprised by one of the fastening elements (80, 81, 82, 83).

5. The device according to one of the previous claims, wherein the expansion sleeve (05) has a ribbing (11) on the outside.

6. The device according to one of the previous claims, wherein a ribbing is provided between expansion sleeve (05) and clamping cone (07), which ribbing fixes the clamping cone (07) in the expansion sleeve (05), at least against receding, as soon as the clamping cone (07) expands the expansion sleeve (05).

7. The device according to one of the previous claims, wherein the device comprises a conical section of an inner lateral surface of the expansion sleeve interacting with the clamping cone, which conical section is delimited by means of an inner latching section, which inner latching section projects so far into a receiving opening surrounded by the conical section that a clamping cone received herein cannot pass the latching section by its own power.

8. The device according to one of the previous claims, wherein an outer lateral surface of the expansion sleeve (05) has a middle lateral surface section in the form of a straight, general cylinder, the axis of which cylinder extends parallel to the longitudinal axis (06), wherein the outer lateral surface of the expansion sleeve (05) has an outer latching section on both sides of the middle lateral surface section as seen in both directions along the longitudinal axis (06), each outer latching section acting toward the middle lateral surface section and each comprising a latching lug (13), and wherein the distance of the outer lateral surface to the longitudinal axis (06) is greater in at least one direction orthogonal to the longitudinal axis (06) in the outer latching sections than in the middle lateral surface section.

9. A vehicle lamp with a lamp interior, which is completely or partially enclosed by a lamp housing (02) and a lens, and with at least one lighting means at least partly accommodated therein, the lighting means comprising at least one light source for at least one light function, the vehicle lamp comprising at least one device (01) according to one of the previous claims for the at least partial fastening of the vehicle lamp to a vehicle.

10. The vehicle lamp according to claim 9, wherein the vehicle lamp comprises the reception (04).

11. The vehicle lamp according to claim 10, wherein the reception (04) is arranged at the lamp housing (02).

## Revendications

1. Dispositif (01) pour fixer au moins partiellement un phare de véhicule à un véhicule, dans lequel le phare de véhicule et le véhicule forment chacun une contrepartie l'un de l'autre, comprenant :
- une douille expansible (05) pouvant être disposée dans un logement (04) sur une contrepartie,
- un cône de serrage (07) logé dans la douille expansible (05) de manière mobile le long d'un axe longitudinal (06) en élargissant la douille expansible (05), et
- un moyen de fixation (08) pouvant être fixé sur une autre contrepartie et ayant par son actionnement un effet modificateur de distance sur une position du cône de serrage (07) le long de l'axe longitudinal (06),
dans lequel la douille expansible (05), à l'état non élargi, est logée dans le logement (04) de manière flottante au moins dans la direction le long de l'axe longitudinal (06) et, à l'état élargi, est fixée dans le logement (04) dans sa position alors prise le long de l'axe longitudinal (06), et par l'actionnement du moyen de fixation (08) agissant sur la position du cône de serrage (07) en réduisant la distance, la douille expansible (05) est d'abord amenée en appui sur la contrepartie et, ensuite, le cône de serrage (07) élargit la douille expansible (05), **caractérisé en ce que** la douille expansible (05), à l'état non élargi, est logée dans le logement (04) de manière flottante en plus dans la direction d'un axe de déplacement s'étendant perpendiculairement à l'axe longitudinal (06) et la douille expansible (05) s'élargit sous l'effet du cône de serrage (07) lorsque le moyen de fixation (08) réduisant la distance est actionné dans la direction d'un axe d'extension se dressant aussi bien perpendiculairement sur l'axe longitudinal (06) que perpendiculairement sur l'axe de déplacement.

2. Dispositif selon la revendication 1, dans lequel le moyen de fixation (08) comprend deux éléments de fixation (80, 81, 82, 83) coopérant l'un avec l'autre.

3. Dispositif selon la revendication 2, dans lequel le moyen de fixation (08) comprend un boulon fileté (82) et un écrou fileté (83).

4. Dispositif selon la revendication 2 ou 3, dans lequel le cône de serrage (07) comprend l'un des éléments de fixation (80, 81, 82, 83) ou est compris par un des éléments de fixation (80, 81, 82, 83).

5. Dispositif selon l'une quelconque des revendications précédentes, dans lequel la douille expansible (05) présente une cannelure (11) à l'extérieur.

6. Dispositif selon l'une quelconque des revendications précédentes, dans lequel est prévue entre la douille expansible (05) et le cône de serrage (07) une cannelure qui fixe le cône de serrage (07) dans la douille expansible (05), dès que celui-ci élargit la douille expansible (05), au moins pour l'empêcher de revenir en arrière.

7. Dispositif selon l'une quelconque des revendications précédentes, dans lequel il comprend une partie de forme conique, délimitée au moyen d'une section d'encliquetage intérieure, d'une surface d'enveloppe intérieure de la douille expansible coopérant avec le cône de serrage, laquelle section d'encliquetage intérieure fait saillie dans une ouverture de réception entourée par la partie de forme conique de telle sorte qu'un cône de serrage logé dans celle-ci ne peut pas passer la section d'encliquetage par sa propre force.

8. Dispositif selon l'une quelconque des revendications précédentes, dans lequel une surface d'enveloppe extérieure de la douille expansible (05) présente une section de surface d'enveloppe médiane sous la forme d'un cylindre général droit dont l'axe de cylindre s'étend parallèlement à l'axe longitudinal (06), dans lequel la surface d'enveloppe extérieure de la douille expansible (05) présente, des deux côtés de la section de surface d'enveloppe médiane, vu dans les deux directions le long de l'axe longitudinal (06), respectivement une section d'encliquetage extérieure agissant vers la section de surface d'enveloppe médiane et comprenant un ergot d'encliquetage (13), et dans lequel la distance entre la surface d'enveloppe extérieure et l'axe longitudinal (06) est, dans les sections d'encliquetage extérieures dans au moins une direction normale par rapport à l'axe longitudinal (06), plus grande que dans la section de surface d'enveloppe médiane.

9. Phare de véhicule doté d'un espace intérieur de phare entouré entièrement ou partiellement d'un boîtier de phare (02) et d'une plaque d'éclairage et au moins un moyen d'éclairage pour au moins une fonction d'éclairage, logé au moins partiellement dans celui-ci et comprenant au moins une source lumineuse, comprenant au moins un dispositif (01) selon l'une quelconque des revendications précédentes pour sa fixation au moins partielle sur un véhicule.

10. Phare de véhicule selon la revendication 9, dans lequel il comprend le logement (04).

11. Phare de véhicule selon la revendication 10, dans lequel le logement (04) est agencé sur le boîtier de phare (02).
